(19) **Europäisches Patentamt / European Patent Office / Office européen des brevets**

(11) **EP 4 701 091 A1**

(12) **EUROPEAN PATENT APPLICATION**
published in accordance with Art. 153(4) EPC

(43) Date of publication:
**25.02.2026 Bulletin 2026/09**

(21) Application number: **24836341.8**

(22) Date of filing: **03.07.2024**

(51) International Patent Classification (IPC):
*H04B 7/0413* (2017.01)      *H04B 5/72* (2024.01)
*H04W 24/08* (2009.01)      *H04W 24/10* (2009.01)
*H04W 64/00* (2009.01)      *H04W 72/21* (2023.01)
*H04W 72/231* (2023.01)      *H04W 72/232* (2023.01)
*H04B 17/318* (2015.01)

(52) Cooperative Patent Classification (CPC):
H04B 5/72; H04B 7/0413; H04B 17/318;
H04L 5/00; H04W 24/08; H04W 24/10;
H04W 28/02; H04W 64/00; H04W 72/21;
H04W 72/231; H04W 72/232

(86) International application number:
**PCT/KR2024/009421**

(87) International publication number:
**WO 2025/009894 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.07.2023 KR 20230087205**

(71) Applicants:
• **Hyundai Motor Company**
  **Seoul 06797 (KR)**
• **Kia Corporation**
  **Seoul 06797 (KR)**
• **Seoul National University R&DB Foundation**
  **Seoul 08826 (KR)**

(72) Inventors:
• **LEE, Jeong Su**
  **Hwaseong-si, Gyeonggi-do 18280 (KR)**
• **HONG, Ui Hyun**
  **Hwaseong-si, Gyeonggi-do 18280 (KR)**
• **SUH, Young Kil**
  **Hwaseong-si, Gyeonggi-do 18280 (KR)**
• **HAHN, Gene Back**
  **Hwaseong-si, Gyeonggi-do 18280 (KR)**
• **KWON, Jeonghyeon**
  **Seoul 08826 (KR)**
• **KIM, Dong Hwi**
  **Seoul 08826 (KR)**
• **CHOI, Wan**
  **Seoul 08826 (KR)**

(74) Representative: **Isarpatent**
  **Patent- und Rechtsanwälte Partg mbB**
  **Friedrichstraße 31**
  **80801 München (DE)**

(54) **METHOD AND APPARATUS FOR ALLOCATING VISIBLE AREA IN COMMUNICATION SYSTEM HAVING VERY LARGE SCALE MULTIPLE INPUT MULTIPLE OUTPUT**

(57)    A method of a base station, according to one embodiment of the present disclosure, may comprise an operation of determining a VR to be allocated to a terminal in an XL-MIMO antenna panel such that the terminal is located in a far field or a near field distinguished by a VR size reference value on the basis of service-related information and RSRP for each representative antenna.

[FIG. 16]

EP 4 701 091 A1

**VR size criterion calculation**

S1610 S1611

base station /terminal

transmit terminal information to the base station, and measure a distance between the terminal and the base station

S1612

base station

calculate a VR size criterion based on a Rayleigh distance

**VR allocation based on terminal latency requirement or terminal mobility**

S1621 S1620 S1622 S1623

base station /terminal

transmit RS through representative antennas of the base station, and receive RSRPs from the terminal

terminal

transmit latency requirement or mobility information of the terminal to the base station

base station

allocate a VR based on the latency requirement or mobility information of the terminal

**VR allocation based on a target data rate of the terminal**

S1631 S1630 S1632 S1633

base station /terminal

transmit RS through representative antennas of the base station, and receive RSRPs from the terminal

terminal

transmit throughput requirement information of the terminal to the base station

base station

allocate a VR based on the throughput requirement of the terminal

**Description**

[Technical Field]

The present disclosure relates to an enhanced communication technique, and more particularly, to an extra-large scale multiple input multiple output (XL-MIMO) technique.

[Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, a 5G communication system serves a plurality of terminals simultaneously and employs a massive multiple-input multiple-output (MIMO) system to achieve higher data transmission rates. When a base station utilizes a massive MIMO system, it can achieve not only a higher data transmission rate for the terminal but also low inter-user interference and high energy efficiency by concentrating a beam on a specific location.

When Frequency Range 2 (FR2) used in the 5G system and/or higher frequency bands expected to be used in a 6G system are used, a transmission signal is subject to a reduction in communication coverage due to high path attenuation. As one method to compensate for the problem of reduced communication coverage, a massive MIMO system may be used.

Although the current massive MIMO system has the above-described advantages, the system has a limitation that it is difficult to obtain a sufficient spatial dimension because a very large number of antennas are deployed and used in a narrow space. A future 6G communication system is considering a form in which a large number of antennas are deployed on wide walls of buildings such as airports, shopping malls, and stadiums in order to obtain additional spatial dimensions beyond the massive MIMO system. A system in which a larger number of antennas are deployed over a wide area in order to obtain additional spatial dimensions compared to the massive MIMO system is defined as an extra-large scale massive MIMO (XL-MIMO) system.

In the XL-MIMO system, it is inefficient to use all antennas of an XL-MIMO antenna panel for data transmission to a terminal. In addition, among the antennas of the XL-MIMO antenna panel, there may exist regions that do not contribute to an increase in data transmission rate even if they are used for communication with the terminal.

Therefore, methods and apparatuses for allocating antennas according to requirements of data provided to the terminal in the XL-MIMO system are required.

[Disclosure]

[Technical Problem]

The present disclosure is directed to providing a method and an apparatus for allocating antennas according to requirements of data provided from a communication system supporting XL-MIMO to a terminal.

[Technical Solution]

A method of a base station, according to a first exemplary embodiment of the present disclosure for achieving the above-described objective, may comprise: receiving, from a terminal, a first signal including information on a distance between the base station and the terminal and information on an array antenna size of the terminal; determining, based on the distance between the base station and the terminal, a visibility region (VR) criterion value for distinguishing far-field communication and near-field communication in an extra-large scale massive multiple-input multiple-output (XL-MIMO) antenna panel; dividing the XL-MIMO antenna panel into a predetermined number of groups; transmitting, to the terminal, reference signals (RSs) through representative antennas of the respective divided groups; receiving, from the terminal, reference signal received powers (RSRPs) for the representative antennas; receiving, from the terminal, service-related information of the terminal; and determining, based on the service-related information and the RSRPs for the representative antennas, a VR to be allocated to the terminal in the XL-MIMO antenna panel, such that the terminal is located in a far-field region or a near-field region distinguished by the VR size criterion value.

The service-related information may be one of a latency requirement of the terminal, a mobility of the terminal, or a target data rate of the terminal.

The method may further comprise: determining whether a service to the terminal is available through the determined VR by using first information in the service-related information, which is not used in determining the VR; and transmitting, to the terminal, service-availability information based on the determining.

The method may further comprise: based on the service-availability information indicating that the service is available, transmitting, to the terminal, downlink control information (DCI) including resource allocation information for first data to be transmitted to the terminal and modulation and coding rate information for the first data; and transmitting, to the terminal, the first data modulated and encoded based on the DCI.

The method may further comprise: based on the service-availability information indicating that the service is unavailable, requesting the terminal to reconfigure the service-related information; receiving, from the terminal, the reconfigured service-related information; and re-determining, based on the reconfigured service-related information, a VR to be allocated to the terminal in the XL-MIMO antenna panel such that the terminal is located in the far-field region or the near-field region.

The method may further comprise: determining whether a service to the terminal is available through the determined VR by using first information in the service-related information, which is not used in determining the VR; based on the service being unavailable through the determined VR, comparing a time required for reconfiguring the service-related information and a time required for providing the service through the determined VR; and based on the time required for providing the service through the determined VR being shorter than the time required for reconfiguring the service-related information, transmitting first data to be transmitted to the terminal through the determined VR in two or more divided transmissions.

The VR size criterion value may be an antenna size value of the XL-MIMO antenna panel corresponding to a first value that distinguishes near-field communication and far-field communication based on a Rayleigh distance.

The determining of the VR to be allocated to the terminal may comprise: determining a required VR size based on the service-related information; and allocating, to the VR, groups of representative antennas having higher RSRP values among the RSRP values for the representative antennas of the divided groups of the XL-MIMO antenna panel, until the required VR size is satisfied.

All antennas belonging to a same group as each representative antenna allocated to the VR may be allocated to the VR.

A base station, according to an exemplary embodiment of the present disclosure, may comprise at least one processor, wherein the at least one processor may cause the base station to: receive, from a terminal, a first signal including information on a distance between the base station and the terminal and information on an array antenna size of the terminal; determine, based on the distance information between the base station and the terminal, a visibility region (VR) size criterion value for distinguishing far-field communication and near-field communication in an extra-large scale massive multiple-input multiple-output (XL-MIMO) antenna panel; divide the XL-MIMO antenna panel into a predetermined number of groups; transmit, to the terminal, reference signals (RSs) through representative antennas of the respective divided groups; receive, from the terminal, reference signal received powers (RSRPs) for the representative antennas; receive, from the terminal, service-related information of the terminal; and determine, based on the service-related information and the RSRPs for the representative antennas, a VR to be allocated to the terminal in the XL-MIMO antenna panel, such that the terminal is located in a far-field region or a near-field region distinguished by the VR size criterion value.

The service-related information may be one of a latency requirement of the terminal, a mobility of the terminal, or a target data rate of the terminal.

The at least one processor may be configured to cause the base station to: determine whether a service to the terminal is available through the determined VR by using first information in the service-related information, which is not used in determining the VR; and transmit, to the terminal, service-availability information based on the determining.

The at least one processor may be configured to cause the base station to: based on the service-availability information indicating that the service is available, transmit, to the terminal, downlink control information (DCI) including resource allocation information for first data to be transmitted to the terminal and modulation and coding rate information for the first data; and transmit, to the terminal, the first data modulated and encoded based on the DCI.

The at least one processor may be configured to cause the base station to:

based on the service-availability information indicating that the service is unavailable, request the terminal to reconfigure the service-related information; receive, from the terminal, the reconfigured service-related information; and re-determine, based on the reconfigured service-related information, a VR to be allocated to the terminal in the XL-MIMO antenna panel such that the terminal is located in the far-field region or the near-field region.

The at least one processor may be configured to cause the base station to:
determine whether a service to the terminal is available through the determined VR by using first information in the service-related information, which is not used in determining the VR; based on the service being unavailable through the determined VR, compare a time required for reconfiguring the service-related information and a time required for providing the service through the determined VR; and based on the time required for providing the service through the determined VR being shorter than the time required for reconfiguring the service-related information, transmit first data to be transmitted to the terminal through the determined VR in two or more divided transmissions.

The VR size criterion value may be an antenna size value of the XL-MIMO antenna panel corresponding to a first value that distinguishes near-field communication and far-field communication based on a Rayleigh distance.

A method of a terminal, according to an exemplary embodiment of the present disclosure, may comprise: calculating a distance to a first base station based on a first reference signal (RS) received from the first base station; transmitting, to the first base station, a first signal including information on the calculated distance to the first base station and information on an array antenna size of the terminal; calculating a reference signal received power (RSRP) for each of second RSs received from the first base station; transmitting, to the first base station, a report message including information for identifying each of the second RSs and the RSRPs corresponding to the second RSs; transmitting, to the first base station, service-related information required by the terminal; and receiving, from the first base station, service-availability information indicating whether a service is available through a visibility region (VR).

The VR may be composed of antennas in an extra-large scale massive multiple-input multiple-output (XL-MIMO) antenna panel of the first base station that are capable of communicating with the terminal.

The information for identifying each of the second RSs may be one of an antenna identifier or generation parameters of each of the second RSs.

The service-related information may be one of a latency requirement of the terminal, a mobility of the terminal, or a target data rate of the terminal.

The method may further comprise: based on the service-availability information indicating that the service is available, communicating with the first base station.

The method may further comprise: based on the service-availability information indicating that the service is unavailable, attempting to communicate with a second base station.

[Advantageous Effects]

According to the present disclosure, in an XL-MIMO system, a base station can find a visibility region (VR) among antennas of an XL-MIMO antenna panel when transmitting data to a terminal, and can allocate an appropriate VR region in accordance with requirements requested by the terminal. Through this, the base station has an advantage of being able to communicate only through the VR without using all antennas of the XL-MIMO antenna panel. In addition, when adjusting the size of the VR in accordance with requirements requested by the terminal during VR selection, the base station has an advantage of being able to find an optimal VR that satisfies the requirements of the terminal by using a Rayleigh distance to place the terminal in a near-field communication region or in a far-field communication region.

[Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a block diagram illustrating a first exemplary embodiment of communication nodes performing communication.
FIG. 4A is a block diagram illustrating a first exemplary embodiment of a transmission path.
FIG. 4B is a block diagram illustrating a first exemplary embodiment of a reception path.
FIG. 5 is a conceptual diagram illustrating a first exemplary embodiment of a system frame in a communication system.
FIG. 6 is a conceptual diagram illustrating a first exemplary embodiment of a subframe in a communication system.
FIG. 7 is a conceptual diagram illustrating a first exemplary embodiment of a slot in a communication system.
FIG. 8 is a conceptual diagram illustrating a first exemplary embodiment of a time-frequency resource in a communication system.

FIG. 9 is a conceptual diagram illustrating a case in which a base station having an XL-MIMO panel communicates with a terminal.

FIG. 10A is a conceptual diagram illustrating classification of electromagnetic wave regions according to a Rayleigh distance.

FIG. 10B is a conceptual diagram illustrating a case of communication between a base station and a terminal located in a near-field among electromagnetic wave regions according to a Rayleigh distance.

FIG. 10C is a conceptual diagram illustrating a case of communication between a base station and a terminal located in a far-field among electromagnetic wave regions according to a Rayleigh distance.

FIG. 11 is a sequence chart illustrating calculation of a VR size criterion for VR allocation corresponding to a terminal in consideration of an electromagnetic wave region between a base station having an XL-MIMO antenna panel and the terminal.

FIG. 12A is a conceptual diagram illustrating a size of an array antenna when the array antenna of a terminal has a uniform linear array form.

FIG. 12B is a conceptual diagram illustrating a size of an array antenna when the array antenna of a terminal has a uniform planar array form.

FIG. 13 is a flowchart illustrating an operation in which a base station having an XL-MIMO antenna panel allocates a VR corresponding to a terminal based on first service-related information.

FIG. 14 is a flowchart illustrating an operation in which a base station having an XL-MIMO antenna panel allocates a VR corresponding to a terminal based on second service-related information.

FIG. 15 is a conceptual diagram illustrating correlations between VR size determination criteria and VR sizes.

FIG. 16 is a conceptual diagram illustrating an operation of allocating a VR to a specific terminal based on service-related information of the terminal.

[Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher-layer signaling, MAC signaling, and physical (PHY) signaling. A message used for higher-layer signaling may be referred to as a 'higher layer message' or 'higher-layer signaling message'. A message used for MAC signaling may be referred to as a 'MAC message' or 'MAC signaling message'. A message used for PHY signaling may be referred to as a 'PHY message' or 'PHY signaling message'. The higher-layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

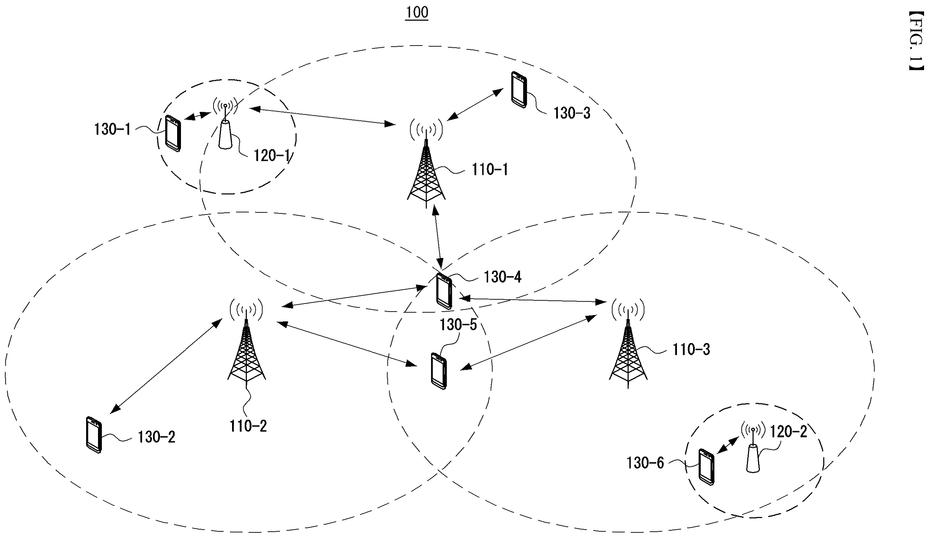

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME). When the communication system 100 is a 5G communication (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in 3$^{rd}$ generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

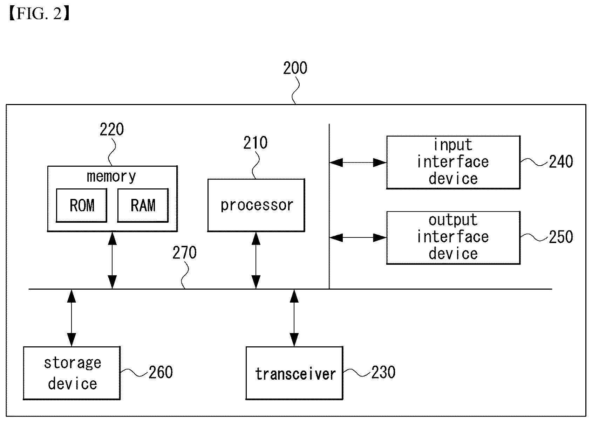

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

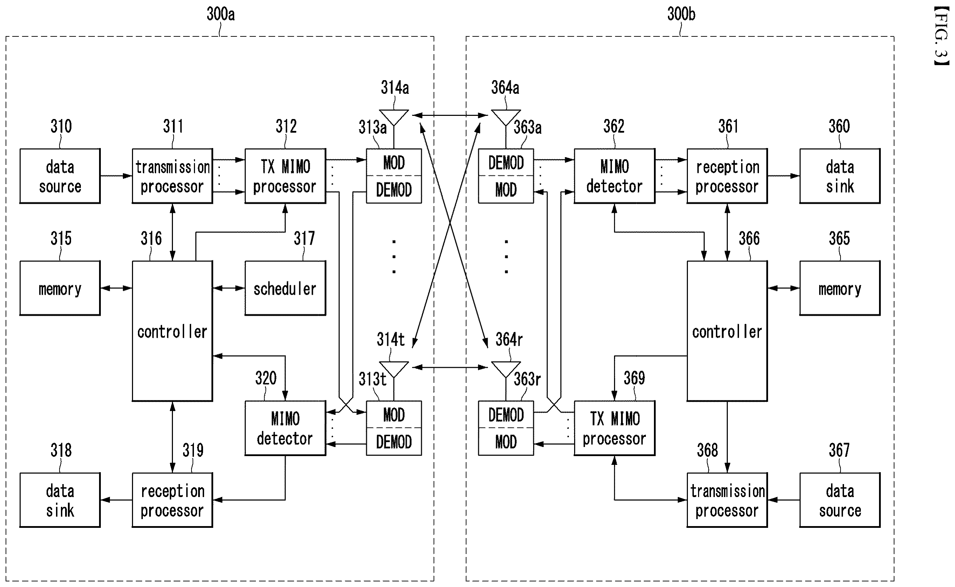

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

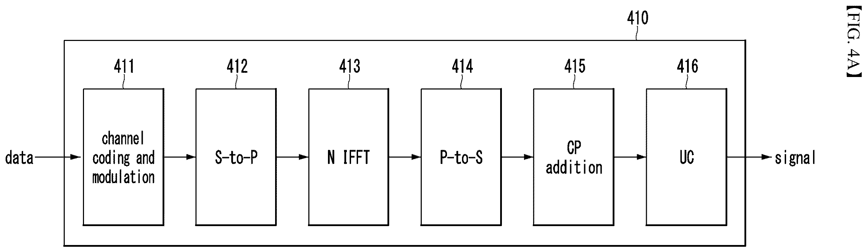

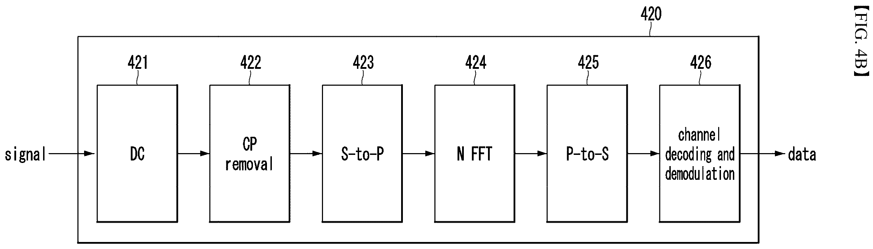

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

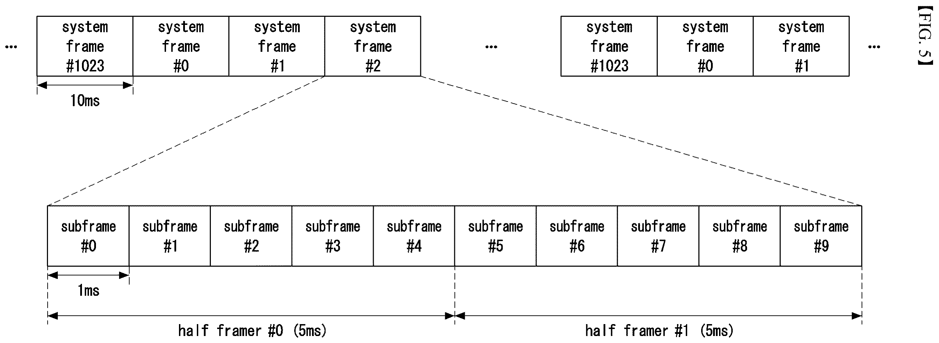

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

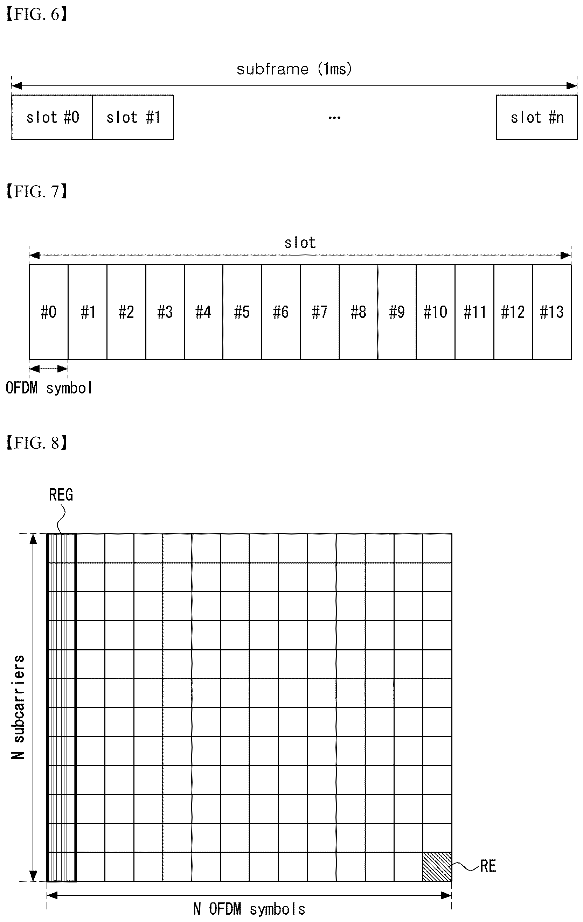

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

[Table 1]

| Subcarrier spacing | 15 kHz | 30 kHz | 60 kHz | 120 kHz | 240 kHz | 480 kHz |
|---|---|---|---|---|---|---|
| OFDM symbol length [$\mu$s] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., $\mu = 0$), the length of slot may be 1 ms. In this case, one system frame may include 10 slots. When a subcarrier spacing is 30 kHz (e.g., $\mu = 1$), the length of slot may be 0.5 ms. In this case, one system frame may include 20 slots.

When a subcarrier spacing is 60 kHz (e.g., $\mu = 2$), the length of slot may be 0.25 ms. In this case, one system frame may include 40 slots. When a subcarrier spacing is 120 kHz (e.g., $\mu = 3$), the length of slot may be 0.125 ms. In this case, one system frame may include 80 slots. When a subcarrier spacing is 240 kHz (e.g., $\mu = 4$), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) of the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, in the future 6G communication system, a form in which a larger number of antennas are arranged on large structures such as walls of airports, shopping malls, and stadiums is being considered in order to obtain additional spatial dimensions beyond the massive MIMO system. A system in which a large number of antennas are deployed over a wider area to obtain additional spatial dimensions beyond the massive MIMO system is referred to as an extra-large scale massive MIMO (XL-MIMO) system.

The XL-MIMO system may obtain not only a high data rate, low inter-terminal interference, and high energy efficiency, which could be achieved through the massive MIMO system, but also a spatial dimension gain that could not be obtained through the massive MIMO system, by arranging a far larger number of antennas than those in the massive MIMO system extensively on places such as large building walls. In the XL-MIMO system, depending on antenna regions, a phenomenon occurs in which different physical channel characteristics appear for a specific terminal, and this phenomenon is defined as a channel non-stationary phenomenon.

Due to the channel non-stationarity, a phenomenon may occur in the XL-MIMO system in which a signal of a terminal is significantly observed only in a specific antenna region within the entire antenna array. In the XL-MIMO system, an antenna region in which the signal of the terminal is significantly observed is defined as a visibility region (VR). The VR is described in more detail with reference to the accompanying drawings below.

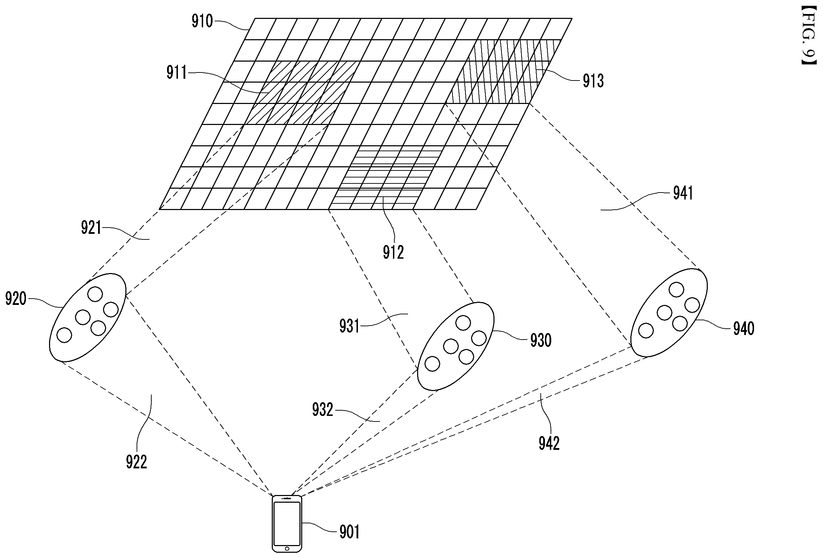

FIG. 9 is a conceptual diagram illustrating a case in which a base station having an XL-MIMO panel communicates with a terminal.

As shown in FIG. 9, a communication system may include an XL-MIMO antenna panel 910, a terminal 901, and a plurality of scatterers 920, 930, and 940. The XL-MIMO antenna panel 910 or a base station having the XL-MIMO antenna panel 910 may also be referred to as an "XL-MIMO antenna system" or an "XL-MIMO system". In the example of FIG. 9, it should be noted that the configuration of devices of the base station connected to the XL-MIMO antenna panel 910 is not illustrated. The XL-MIMO antenna panel 910 may have a large number of antennas arranged on large walls of places such as airports, shopping malls, and stadiums, as described above. Each square of the XL-MIMO antenna panel 910 illustrated in FIG. 9 may be an antenna element or a small antenna panel. In the following description, for convenience of description, the antenna element is considered to include a small antenna panel. The scatterers 920, 930, and 940 may exist in a communication link between the XL-MIMO antenna panel 910 of the base station and the terminal 901. The scatterers 920, 930, and 940 may be any materials that cause signals transmitted and received on a communication link between the XL-MIMO antenna panel 910 of the base station and the terminal 901 to reach the base station and/or the terminal 901 through reflection, scattering, refraction, and/or diffraction. Therefore, the scatterers may be determined depending on a given communication environment. For example, the scatterers may include buildings, vehicles, people, structures, intelligent reflecting surfaces (IRS), reconfigurable intelligent surfaces (RIS), and/or particles in the air.

The antenna regions 911, 912, and 913 of the XL-MIMO antenna panel 910 may form channels to the terminal 901 through the scatterers 920, 930, and 940. In this case, each of the antenna regions 911, 912, and 913 may include a plurality of antenna elements, as illustrated in FIG. 9. An example of channels formed by the antenna regions 911, 912, and 913 with the terminal 901 is as follows.

Through a channel 921 between a first group of antenna elements 911 of the XL-MIMO antenna panel 910 and the first scatterer 920 and a channel 922 between the first scatterer 920 and the terminal 901, one communication path (921 and 922) may be formed between the first group of antenna elements 911 and the terminal 901. In addition, through a channel 931 between a second group of antenna elements 912 of the XL-MIMO antenna panel 910 and the second scatterer 930 and a channel 932 between the second scatterer 930 and the terminal 901, another communication path (931 and 932) may be formed between the second group of antenna elements 912 and the terminal 901. Furthermore, through a channel 941 between a third group of antenna elements 913 of the XL-MIMO antenna panel 910 and the third scatterer 940 and a channel 942 between the third scatterer 940 and the terminal 901, yet another communication path (941 and 942) may be formed between the third group of antenna elements 913 and the terminal 901. The number of scatterers forming the communication paths between the specific antenna regions of the XL-MIMO antenna panel 910 and the terminal 901 may also be interpreted as the number of effective paths existing on the communication link between the base station and the terminal.

Although only three different scatterers 920, 930, and 940 are illustrated in FIG. 9, the scatterers may be greater or fewer in number than those illustrated in FIG. 9. As illustrated in FIG. 9, a signal transmitted by the base station having the XL-MIMO antenna panel 910 may be transmitted to the terminal 901 through the scatterer(s).

In addition, as illustrated in FIG. 9, a signal transmitted from the base station having the XL-MIMO antenna panel 910 to the terminal 901 is not uniformly observed over the entire XL-MIMO antenna panel 910 but tends to be concentrated in some antenna elements. In other words, in the XL-MIMO antenna panel 910, transmission and reception of a signal to and from the terminal 901 may be possible only through some antenna elements, namely through the VR defined above. The meaning that signal transmission and reception are possible only through the VR may mean that a reference signals received power (RSRP) of a signal transmitted and received with the terminal 901 is observed to be equal to or greater than a preset RSRP threshold only through the first antenna region 911, the second antenna region 912, and the third antenna region 913. As a result, it may mean that even when a signal is transmitted to the terminal 901 through XL-MIMO antenna regions other than the first antenna region 911, the second antenna region 912, and the third antenna region 913, which are VRs, the quality may be less than the RSRP threshold.

As described above, since the XL-MIMO antenna panel 910 includes a very large number of antenna elements and communication with the terminal 901 is possible only through specific VR(s) among them, consideration of the VR(s) is essential in the communication system equipped with the XL-MIMO antenna panel 910. In addition, for a specific terminal, a VR in the XL-MIMO antenna panel 910 may vary depending on a location of the terminal and a surrounding environment. Therefore, when performing communication with the terminal in the communication system having the XL-MIMO antenna panel 910, a process of finding a VR suitable for the location of the terminal and the surrounding environment and transmitting and receiving information through the VR is essential.

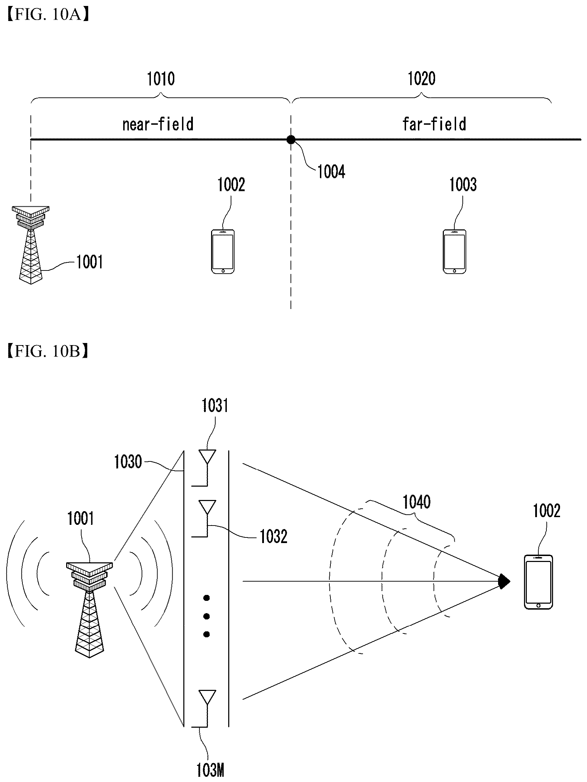

FIG. 10A is a conceptual diagram illustrating classification of electromagnetic wave regions according to a Rayleigh distance.

As shown in FIG. 10A, a base station 1001 may be a base station having the XL-MIMO antenna panel described above. In addition, the base station 1001 may include all or part of the components of FIG. 2 described above. For example, in addition to the components illustrated in FIG. 2, the base station 1001 may further include an interface for communication with another base station and/or an interface for communication with a core network. In addition, the base station may include at least a part of the components described in FIG. 4A and/or FIG. 4B.

Terminals 1002 and 1003 may also include all or part of the components of FIG. 2 described above. At least one of the terminals 1002 and 1003 may further include various sensors, a user interface, and the like for user convenience. At least one of the terminals 1002 and 1003 may include at least a part of the components described in FIG. 4A and/or FIG. 4B.

In FIG. 10A, regions in which an electromagnetic wave is delivered may be classified into a near-field 1010 and a far-field 1020 based on a specific reference point 1004 from the base station 1001. Here, the specific reference point 1004 may be a point according to a Rayleigh distance. Therefore, FIG. 10A may correspond to an example in which an electromagnetic wave region is classified into the near-field 1010 and the far-field 1020 according to a measured distance between the base station and the terminal in a situation where a Rayleigh distance is given.

When a Rayleigh distance, which is a reference for classifying an electromagnetic wave region, is R, the Rayleigh distance R may be expressed as in Equation 1 below.

[Equation 1]

$$R = 2(D_{\text{BS}} + D_{\text{UE}})^2/\lambda$$

In Equation 1, $D_{BS}$ may denote a size of an antenna array of the base station 1001 as a transmitter in a downlink environment, and $D_{UE}$ may denote a size of an antenna array of the terminal 1002 or 1003 as a receiver in the downlink environment. In addition, $\lambda$ may denote a wavelength of an electromagnetic wave.

Since standard specifications may define a frequency used in a specific communication system, the wavelength of the electromagnetic wave may be determined. In addition, the standard specifications may regulate a number of antenna ports required for the terminal using the MIMO antenna. Since the number of antenna ports may have a minimum specification and a maximum specification, the size of the antenna array of the terminal may be determined based on one of the minimum specification and the maximum specification or based on terminal capability information provided from the terminal. In other words, the size of the antenna array of the terminal may be determined to a specific value based on the standard specifications and/or the terminal capability information. Accordingly, the Rayleigh distance may be determined to a specific distance value according to the size of the antenna array of the base station 1001 as a transmitter.

In FIG. 10A, the first terminal 1002 located in the near-field 1010 and the second terminal 1003 located in the far-field 1020 are illustrated. In FIG. 10A, only the first terminal 1002 is illustrated in the near-field 1010 for convenience of description and for reducing complexity of the drawing, but a plurality of terminals may be present in the near-field 1010. In addition, in FIG. 10A, only the second terminal 1003 is illustrated in the far-field 1020, but a plurality of terminals may be present in the far-field 1020.

FIG. 10B is a conceptual diagram illustrating a case of communication between a base station and a terminal located in a near-field among electromagnetic wave regions according to a Rayleigh distance.

As shown in FIG. 10B, the base station 1001 may communicate with terminal(s) through an XL-MIMO antenna panel 1030. The XL-MIMO antenna panel 1030 is illustrated, for convenience of description, as including M antennas 1031, 1032, ..., and 103M. In addition, in FIG. 10B, the antennas 1031, 1032, ..., and 103M are illustrated as being arranged in a single row, but in practice, the antennas 1031, 1032, ..., and 103M may be arranged in a planar structure having s rows and q columns, or in a curved surface structure where the plane is bent in a specific direction.

In FIG. 10B, the base station 1001 may transmit a signal to the first terminal 1002 located in the near-field through the XL-MIMO antenna panel 1030. Since the first terminal 1002 is located in the near-field, the signal transmitted from the base station 1001 to the first terminal 1002 needs to be modeled by reflecting a spherical wave form 1040. Therefore, the base station 1001 needs to design a beam by calculating each antenna phase of the XL-MIMO antenna panel 1030.

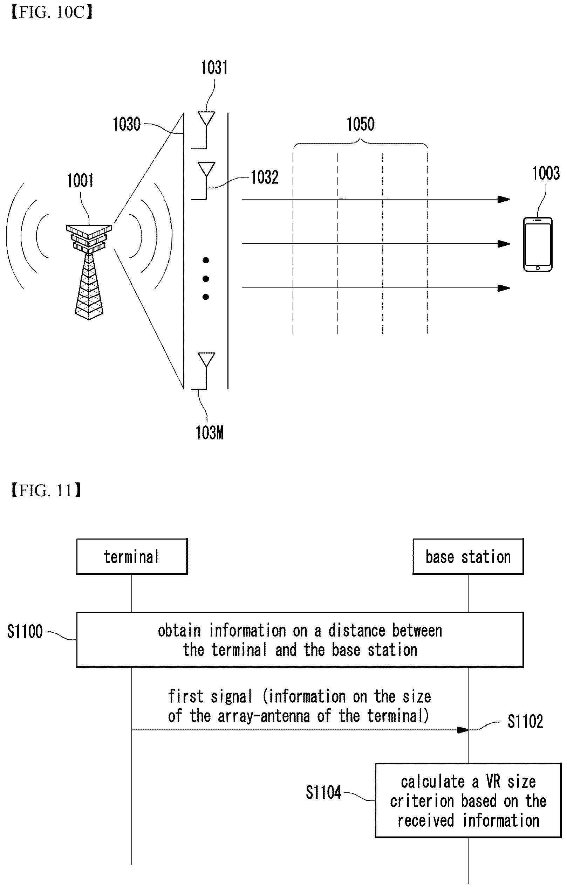

FIG. 10C is a conceptual diagram illustrating a case of communication between a base station and a terminal located in a far-field among electromagnetic wave regions according to a Rayleigh distance.

In FIG. 10C, the base station 1001 may be understood in the same manner as described in FIG. 10B above. In other words, the base station 1001 may communicate with terminal(s) through the XL-MIMO antenna panel 1030 in which M antennas 1031, 1032, ..., and 103M are arranged. In FIG. 10C, the antennas 1031, 1032, ..., and 103M are illustrated as being arranged in a single row, but in practice, the antennas 1031, 1032, ..., and 103M may be arranged in a planar structure having s rows and q columns, or in a curved surface structure where the plane is bent in a specific direction.

In FIG. 10C, the base station 1001 may transmit a signal to the second terminal 1003 located in the far-field through the XL-MIMO antenna panel 1030. Since the second terminal 1003 is located in the far-field, a signal transmitted and received between the base station 1001 and the second terminal 1003, that is, a form of an electromagnetic wave, may be approximated and modeled as a planar wave form 1050. Therefore, a beam transmitted to the second terminal 1003 located in the far-field may be designed relatively simply.

As described with reference to FIGS. 10A to 10C, the size of the XL-MIMO antenna array 1030 of the base station 1001 may be a factor causing the Rayleigh distance to change. Therefore, in the XL-MIMO system, a size of a VR may affect determination of an electromagnetic wave region. In other words, as the size of the VR increases in the XL-MIMO system, the Rayleigh distance becomes longer, so that a possibility exists that a specific terminal is located in the near-field.

In addition, as a terahertz band is used, the wavelength becomes shorter, so that the Rayleigh distance becomes longer as a higher frequency band is used. Due to this phenomenon, the near-field may further increase. In other words, a probability that terminals communicate in the near-field may increase.

Therefore, in a future 6G communication system, consideration of the near-field region as well as the far-field region is required. In other words, since a beam design process in each electromagnetic wave region differs from that of currently used 4G communication systems and/or 5G communication systems, appropriate communication in an electromagnetic wave region (near-field or far-field) may not be performed. This may make it difficult to achieve required communication performance, for example, a latency requirement.

However, in a current communication standard, an electromagnetic wave region is not considered in a process of allocating an antenna array. Therefore, in an XL-MIMO system expected to be introduced in the future, a VR allocation procedure considering an electromagnetic wave region and a definition of parameters therefor are required.

Based on the description above, communication performance of a terminal may be determined based on a VR for the terminal in an XL-MIMO antenna panel. Therefore, when communication between the XL-MIMO system and the terminal is performed, it is important in terms of communication resource efficiency that the base station and the terminal estimate the VR of the terminal in advance and perform a signal transmission/reception procedure through the estimated VR.

As described in FIGS. 10A to 10C, an electromagnetic wave region may be classified into the near-field 1010 referred to as a Fresnel region and the far-field 1020 referred to as a Fraunhofer region. When a maximum allowable phase error is φ and a size of the antenna array of the XL-MIMO antenna panel 1030 is *D,* a reference R of the far-field, which is a boundary between the near-field 1010 and the far-field 1020, may be expressed as Equation 2 below.

[Equation 2]

$$R = \pi D^2 / 4\phi\lambda$$

Here, the maximum allowable phase error refers to a maximum phase difference between two different antennas within a given antenna array of the XL-MIMO antenna panel 1030.

When the maximum allowable phase error φ is greater than π/8, a Fraunhofer approximation, which is an equation regarding propagation in a far-field, does not hold, and it is difficult to approximate and model in a planar wave form, which is assumed in the existing communication systems, for example, 4G communication systems and/or 5G communication systems. The Fraunhofer approximation is also referred to as a far-field diffraction equation.

Accordingly, it may be impossible to express a phase of an electromagnetic wave observed at each antenna of the XL-MIMO antenna panel 1030 as a linear function for an antenna index, and the phase of the antenna needs to be expressed as a nonlinear function reflecting the antenna index, an incident angle, and a distance between the base station and the terminal. Therefore, the base station may not use the same beamforming technique in the near-field region as the beamforming technique used in the far-field region. In addition, communication techniques such as initial access, beam management, and resource allocation are difficult to apply in the same manner as standard specifications of the existing 4G communication systems and/or 5G communication systems.

When the maximum allowable phase error φ is π/8, the boundary of the electromagnetic wave region according to Equation 2, that is, the reference R of the far-field, may be expressed as Equation 3 below.

[Equation 3]

$$R = 2D^2 / \lambda$$

Analyzing the physical meaning of Equation 3, for a signal received from an object located at a distance of $2D^2/\lambda$ or more from the XL-MIMO antenna panel of the base station, a phase difference between different antennas may be guaranteed not to exceed π/8. Therefore, the planar wave assumption may be used.

According to the 3GPP technical specifications, based on a Precoding Matrix Indicator (PMI), a configuration of an antenna array according to a number of antenna ports of a channel state information-reference signal (CSI-RS) is defined in a single-panel/multi-panel environment. The configuration of the antenna array may include a number of horizontal antennas, a number of vertical antennas, and a number of beams.

In addition, in the same technical specifications, different PMIs are distinguished and defined in tables according to a type of antenna array, a number of layers, antenna ports, and a codebook mode. In a multi-panel MIMO system of the 5G NR standard, each panel is composed of multiple radio frequency integrated circuits (RFICs), and multiple panels may be used cooperatively when transmitting a signal to one terminal or one base station.

In general, as a number of antennas allocated to one panel increases, hardware implementation complexity increases, so a multi-panel MIMO system has advantages in terms of hardware design cost and power consumption. Additionally, in the multi-panel MIMO system, it is also possible to obtain a multiplexing gain by arranging antenna panels sufficiently spaced apart. As such, the current 3GPP standard defines and uses multi-panels in order to reduce computational complexity and power consumption in an environment with a very large number of antennas and to selectively utilize more suitable panels based on channel environments among terminals.

In a future 6G communication system, high frequency bands such as terahertz bands are expected to be used. In addition, as a size of an antenna array at a base station increases, a size of a base station antenna array allocated to a specific terminal may not only increase computational complexity and power consumption but may also affect an electromagnetic wave region between the base station and the terminal.

However, the 5G NR standard does not consider communication through an antenna array composed of a very large number of antennas as in the XL-MIMO system or through a high frequency band such as a terahertz band, and most communication techniques in the current standard assume only a far-field region. Therefore, when allocating a VR in the XL-MIMO system expected to be applied in the future, the base station needs to consider both far-field communication and near-field communication. In other words, when adopting the XL-MIMO system, the base station needs a process of selecting an electromagnetic wave region suitable for a current environment of a terminal and requirements of the terminal based on characteristics of the electromagnetic wave region, and determining a size of a VR, that is, a size of the base station antenna array, suitable therefor.

For a terminal located in the far-field, since the base station forms a beam through beam steering based on angle information of the terminal, beamforming may be performed relatively simply. Therefore, for the terminal located in the far-field, the base station is suitable to support a service having a low latency requirement. Here, angle information of the terminal may include Angle of Arrival (AoA) and Angle of Departure (AoD) information. In addition, beam steering is a technique of changing a direction of a main lobe of a radiation pattern, and may refer to a technique of steering a beam by switching antenna elements or changing relative phases of RF signals driving the elements in wireless and radar systems.

However, for terminals located in the far-field, when the base station transmits signals to two different terminals existing at similar angles, the two signals directed to the respective different terminals have a disadvantage of high mutual interference.

In contrast, for a terminal located in the near-field, the base station needs to calculate a phase of each antenna based on angle and distance information of the terminal and calculate a beamforming vector based on the calculated phases. Therefore, when serving the terminal located in the near-field, computational complexity and process complexity for beamforming at the base station may increase.

However, for a terminal located in the near-field, the base station may form a beam such that it is concentrated only in a specific spatial region, based on phase information between the terminal and all antennas. In a multi-user environment where multiple terminals are located in the near-field, interference between signals transmitted to respective terminals may be reduced. Therefore, the base station may provide services with a high target data rate to terminals located in the near-field region.

A process in which the base station forms a beam such that the beam is concentrated only in a specific spatial region for beamforming to a terminal located in the near-field by reflecting phases observed at respective antennas may be defined as 'beam focusing'.

As described above, an electromagnetic wave region may be classified into a far-field and a near-field, and it can be clearly seen that there are distinct advantages and disadvantages when terminals located in the far-field and terminals located in the near-field communicate with the base station. Therefore, in an XL-MIMO system expected to be introduced in the future, if a VR is allocated in consideration of characteristics of an electromagnetic wave region, communication suitable for a service required by the terminal may be possible. For example, by appropriately selecting a VR, the base station may cause the terminal to be located in the near-field or may cause the terminal to be located in the far-field. In other words, by appropriately selecting a VR, the base station may satisfy a latency requirement of the terminal or may satisfy a target data rate of the terminal.

If a VR is not appropriately selected, for example, when the base station configures a VR such that a terminal having a low latency requirement is located in the near-field, a time for beamforming calculation for providing a service from the base station to the terminal may become long. As a result, when a VR is configured such that the terminal having a low latency requirement is located in the near-field, the base station is not able to provide the service desired by the terminal.

In another example, when the base station configures a VR such that a terminal requiring a high data rate is located in the far-field, due to interference between signals transmitted by the base station to a plurality of terminals, the base station is not able to provide the service desired by the terminal.

As described above, in an XL-MIMO system to be introduced in the future, it is very important to allocate a VR in consideration of an electromagnetic wave region. However, in the current 3GPP standard, when allocating an antenna array to a terminal, only computational complexity and power consumption are considered, and an antenna array in consideration of an electromagnetic wave region is not allocated.

Therefore, the present disclosure describes methods and apparatuses for identifying an electromagnetic wave region suitable for performing communication according to requirements of a terminal - for example, the terminal's latency requirement and target data rate - and for determining the size of a base station antenna array (i.e., VR size). Specifically, the present disclosure also describes methods and apparatuses for determining the size of a base station antenna array (i.e., VR size) suitable for a given size of a terminal antenna array and a measured distance between the base station and the terminal.

Operations of the present disclosure to be described below may include the following procedures.

First, a base station may configure a VR size criterion for performing communication in a specific electromagnetic wave region according to a size of a base station antenna array, by synthesizing information possessed by the base station and information received from a terminal. The base station may determine, according to requirements of the terminal, whether to perform far-field communication or to perform near-field communication with the terminal.

When it is determined to perform far-field communication with the terminal, the base station may determine a VR size for far-field communication. In this case, based on the VR size criterion, the base station may determine a size of a VR corresponding to the terminal for far-field communication with the terminal to be smaller than the VR size criterion.

When it is determined to perform near-field communication with the terminal, the base station may determine a VR size for near-field communication. The base station may determine a size of a VR corresponding to the terminal for near-field communication with the terminal to be larger than the VR size criterion.

In addition, for convenience of description, the present disclosure describes a procedure in which a VR is allocated based on a latency requirement requested by the terminal, a mobility-based VR allocation scheme of the terminal, and a target data rate of the terminal. However, these are examples for convenience of description, and additional criteria other than the latency requirement, the mobility of the terminal, and the target data rate may also be used. Further, a method of determining an electromagnetic wave region described in the present disclosure may allow the base station, when determining a VR size, to flexibly configure the VR size by additionally considering criteria other than those described in the present disclosure for determining the VR size.

In the present disclosure described below, it is assumed that the base station has an XL-MIMO antenna panel and that communication is performed between the base station and the terminal. Since the base station having the XL-MIMO antenna panel has a very large number of antennas included in the XL-MIMO antenna panel, the base station needs to estimate a VR corresponding to the terminal before communication with the terminal. The base station may communicate with the terminal through the estimated VR. In contrast, the terminal may be configured with a number of antennas that is very small compared to the number of antennas included in the XL-MIMO antenna panel. Therefore, in the present disclosure described below, it is assumed that the terminal does not require a VR estimation procedure.

A VR allocation process in consideration of an electromagnetic wave region in the XL-MIMO system proposed in the present disclosure may broadly include the following three procedures:

[1] a method of calculating a VR size criterion for VR allocation corresponding to a terminal in consideration of an electromagnetic wave region, [2] a method of VR allocation based on a latency requirement of the terminal or mobility of the terminal, and [3] a method of VR allocation based on a target data rate of the terminal. Hereinafter, each procedure will be described in more detail.

[1] Method of calculating a VR size criterion for VR allocation corresponding to a terminal in consideration of an electromagnetic wave region

In an electromagnetic wave region determination technique based on a Rayleigh distance, the Rayleigh distance R may be determined according to Equation 1 described above. Therefore, when a distance d between the base station and the terminal is smaller than the Rayleigh distance R, the terminal may be located in the near-field, and when the distance d between the base station and the terminal is greater than the Rayleigh distance R, the terminal may be located in the far-field.

The classification criterion according to Equation 1 corresponds to a case in which an electromagnetic wave region is determined according to a measured distance between the base station and the terminal in a situation where the Rayleigh distance R is fixed. However, when the size of the antenna array of the terminal and the distance between the base station and the terminal are given, it is also possible to determine an electromagnetic wave region according to the size of the antenna array of the base station.

When determining an electromagnetic wave region according to the size $D_{BS}$ of the antenna array of the base station, if the terminal is located in the near-field, the size $D_{BS}$ of the antenna array of the base station may be determined as in Equation 4 below, and if the terminal is located in the far-field, the size $D_{BS}$ of the antenna array of the base station may be determined as in Equation 5 below.

$$[\text{Equation 4}]$$

$$D_{BS} > \sqrt{d\lambda/2} - D_{UE}$$

$$[\text{Equation 5}]$$

$$D_{BS} < \sqrt{d\lambda/2} - D_{UE}$$

Based on Equation 4 and Equation 5 above, in the XL-MIMO system, when the terminal is suitable for near-field communication, a VR size may be allocated to be larger than $D_{BS}$, and when the terminal is suitable for far-field communication, a VR size may be allocated to be smaller than $D_{BS}$.

To perform VR allocation in consideration of an electromagnetic wave region in the XL-MIMO system, in (1) the VR size criterion calculation technique for VR allocation in consideration of the electromagnetic wave region, a procedure of calculating a VR size criterion $\sqrt{d\lambda/2} - D_{UE}$ required when determining the electromagnetic wave region according to the size $D_{BS}$ of the antenna array of the base station is presented.

FIG. 11 is a sequence chart illustrating calculation of a VR size criterion for VR allocation corresponding to a terminal in consideration of an electromagnetic wave region between a base station having an XL-MIMO antenna panel and the terminal.

The base station may have an XL-MIMO antenna panel and may include all or part of the components described in FIG. 2 above. In addition to the components illustrated in FIG. 2, the base station may further include additional components. For example, the base station may further include an interface for communication with a core network, an interface for communication with an adjacent base station, and an interface for communication with other communication devices (e.g., remote transceiver(s)) connected below.

The terminal may have a plurality of antennas and may form a transmission beam and/or a reception beam using the plurality of antennas. The terminal may include all or part of the components described in FIG. 2 above, and may further include additional components in addition to the components illustrated in FIG. 2. As examples of additional components in addition to the components illustrated in FIG. 2, the terminal may further include various devices such as various sensors (e.g., a geomagnetic sensor, an altitude sensor, etc.) for user convenience and a graphical user interface (GUI).

In step S1100, the terminal may calculate (or measure or estimate) a distance to the base station. In another example, the base station may calculate (or measure or estimate) a distance to the terminal. In the present disclosure described below, a case in which the terminal calculates a distance between the terminal and the base station is assumed and described. However, the base station may calculate the distance between the terminal and the base station.

According to the current 3GPP 5G NR standard, the terminal may use a positioning measurement method to measure the distance to the base station. Two schemes for the positioning measurement method are presented. A first scheme is a scheme in which the terminal measures its own position and reports the position to the base station. A second scheme is a scheme in which the base station transmits a positioning reference signal (PRS) in advance through a downlink (DL), and the base station calculates a distance between the terminal and the base station based on information reported by the terminal after the terminal measures the PRS. The first scheme may be a UE-based scheme, and the second scheme may be a UE-assisted scheme.

When using the second scheme, in addition to distance measurement information measured by the terminal itself, the terminal may transmit to the base station measurement information for calculation of the distance between the terminal and the base station. In this case, the measurement information may include at least one of RSRP, reference signal received path power (RSRPP), time difference of arrival (TDOA), angle of departure (AoD), or Rx-Tx time difference information.

When the base station calculates the distance between the base station and the terminal, the base station may use PRS to measure a DL timing and/or a DL time difference of arrival (DL-TDOA), together with a propagation delay of a physical random access channel (PRACH) preamble. In another example, when the base station calculates the distance between the base station and the terminal, the base station may use a sounding reference signal (SRS) to measure a DL timing/uplink (UL) timing and/or a multi-round trip time (RTT), together with a propagation delay of a PRACH preamble. In another example, when the base station calculates the distance between the base station and the terminal, the base station may use, together with a propagation delay of a PRACH preamble, reference signals that perform terminal position measurement based on timing such as PRS and SRS, or any other physical channels/signals used for timing advance (TA) configuration.

In step S1100, the base station and the terminal may calculate (or measure or estimate) the distance between the base station and the terminal using one of the schemes described above. In the present disclosure described below, for convenience of description, a case in which the terminal measures the distance between the base station and the terminal and reports the distance to the base station is assumed and described.

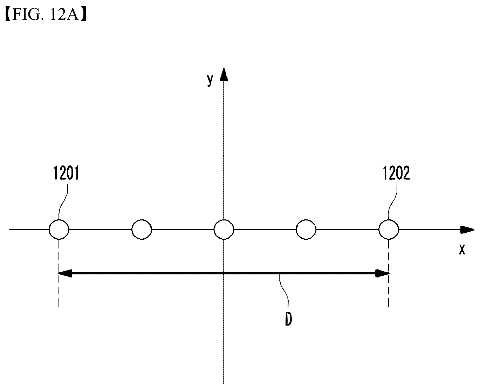

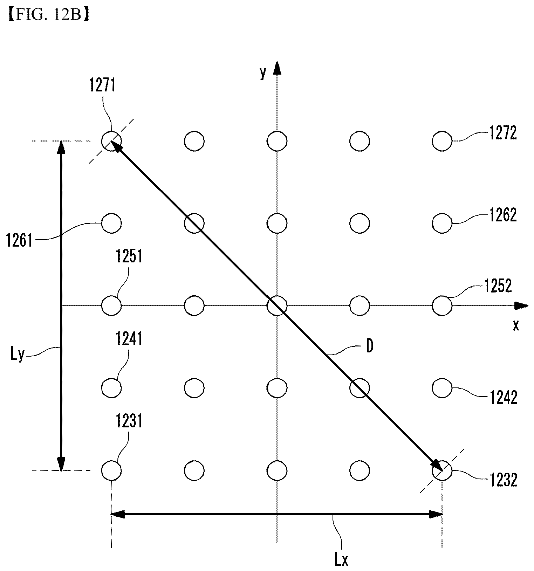

In step S1102, the terminal may transmit a first signal to the base station. The first signal may include information on the array-antenna size of the terminal. In addition, when the terminal measures the distance between the base station and the terminal, the first signal may further include information on the measured distance. First, the array-antenna size of the terminal is with reference to FIGS. 12A and 12B.

FIG. 12A is a conceptual diagram illustrating a size of an array antenna when the array antenna of a terminal has a uniform linear array form, and FIG. 12B is a conceptual diagram illustrating a size of an array antenna when the array antenna of a terminal has a uniform planar array form.

As shown in FIG. 12A, the array antenna of the terminal, which has a uniform linear array (ULA) form, is illustrated. In FIG. 12A, to describe the size of the ULA, an x-axis in a horizontal direction and a y-axis in a vertical direction are illustrated, and a case in which array-antenna elements 1201 to 1202 are arranged in a line on the x-axis in the horizontal direction is illustrated. Each of the antenna elements 1201 to 1202 illustrated in FIG. 12A may be an X-pol antenna element. In the case of the ULA, since the antenna elements 1201 to 1202 are arranged in a line in one axial direction, the size D of the array antenna may be determined as a distance value from the leftmost antenna element to the rightmost antenna element on the x-axis on which the antenna elements 1201 to 1202 are arranged.

As shown in FIG. 12B, the array antenna of the terminal, which has a uniform planar array (UPA) form, is illustrated. In FIG. 12B, to describe the size of the UPA, an x-axis in a horizontal direction and a y-axis in a vertical direction are illustrated.

The UPA may be configured in the same manner that the ULA described in FIG. 12A above is arranged in a direction perpendicular to the direction in which antenna elements are arranged in the ULA. In other words, antenna elements 1231 to 1232 of the bottommost row with respect to the y-axis may be regarded as having the same configuration as the ULA described in FIG. 12A. Antenna elements 1241 to 1242 constituting a row immediately above the bottommost row with respect to the y-axis may also be regarded as having the same configuration as the ULA described in FIG. 12A. In other words, a plurality of rows having the ULA configuration may be arranged in parallel with respect to the y-axis.

In the case of the UPA illustrated in FIG. 12B, the array antenna has a length $L_x$ of the horizontal axis, that is, the x-axis, and a length $L_y$ of the vertical axis, that is, the y-axis, which can be easily identified. Based on these values, the size D of the array antenna of the UPA may be determined as in Equation 6 below.

$$[\text{Equation 6}]$$

$$D = \sqrt{(L_x^2 + L_y^2)}$$

FIGS. 12A and 12B are merely conceptual diagrams for describing how the size of the antenna array included in the terminal is determined, and an actual terminal may store antenna-array size information in advance.

In step S1102, the first signal that the terminal transmits to the base station may include information as in Table 2 below.

[Table 2]

| The size of the antenna array of the terminal | $D_{UE}$ |
|---|---|
| Wave length of the electromagnetic wave | $\lambda = c/f$ |
| The measured distance between the terminal and the base station | $d$ |

The information shown in Table 2 may all be included in one message and transmitted to the base station, or may be transmitted to the base station over multiple times through separate messages. It should be noted that, in FIG. 11, only a case in which the information is included in one message is illustrated for convenience of description. In addition, among the information illustrated in Table 2, information on the wavelength of the electromagnetic wave may be omitted since the base station may already know the information. In Table 2, the wavelength $\lambda$ of the electromagnetic wave may be a value obtained by dividing a speed c of the electromagnetic wave by a frequency f used for communication. As is widely known, the speed of the electromagnetic wave is the same as a speed of light ($c = 3 \times 10^8$ m/s).

Among the information illustrated in Table 2, when the antenna-array size information is transmitted as a separate signal, various messages may be used. Messages that may be used for transmission of the antenna array size information are described below using messages used in the 5G NR standard.

For example, the terminal may transmit the antenna-array size information of the terminal to the base station using uplink control information (UCI).

In another example, the terminal may receive, from the base station, a request for the antenna-array size information of the terminal. The request for the antenna-array size information of the terminal may be a UE information request message. In response to reception of the UE information request message, the terminal may transmit, to the base station, a UE information response message including the antenna-array size information of the terminal.

In another example, the base station may transmit, to the terminal, a system information block (SIB) including information on an instruction to report the antenna-array size information of the terminal, or a new higher-layer message including information on an instruction to report the antenna-array size information of the terminal. In this case, the higher-layer message may be a radio resource control (RRC) signaling message. In response to reception of the SIB or the higher-layer message, the terminal may transmit the antenna-array size information to the base station through a measurement report message, UE assistance information, or RRC signaling.

In step S1102, the base station may receive, from the terminal, the first signal including the information as in Table 2 or including a part of the information illustrated in Table 2.

In step S1104, the base station may calculate a VR size criterion based on the received information.

If wavelength information is not received in step S1102, the base station may calculate a wavelength corresponding to a frequency over which the information is received from the terminal or corresponding to a frequency to be used for communication with the terminal. The base station may calculate, based on the distance information between the base station and the terminal received from the terminal and the antenna-array size information of the terminal, a base-station antenna-array size criterion $D_{field}$ of the base station as in Equation 7 below.

[Equation 7]

$$D_{field} = \sqrt{d\lambda/2} - D_{UE}$$

The base-station antenna-array size criterion $D_{field}$ expressed as in Equation 7 may be a VR size criterion required to perform near-field communication or far-field communication. Therefore, in the description below, the base-station antenna-array size criterion $D_{field}$ may be used in the same sense as the VR size criterion.

In addition, as described above with reference to Equation 1, when the measured distance d between the base station and the terminal is smaller than the Rayleigh distance R, it may be determined that the terminal is located in the near-field, and when the measured distance d between the base station and the terminal is greater than the Rayleigh distance R, it may be determined that the terminal is located in the far-field.

Equations 4 and 5 described that an electromagnetic wave region may also be determined according to the size of the base-station antenna array and the interpretation of Equation 1. In other words, when the size $D_{BS}$ of the base-station antenna array has a value greater than the base-station antenna-array size criterion $D_{field}$, the base station may determine that the terminal is located in the near-field, and when the size $D_{BS}$ of the base-station antenna array has a value smaller than the base-station antenna-array size criterion $D_{field}$, the base station may determine that the terminal is located in the near-field.

Therefore, by taking into consideration a type of service provided by the base station to the terminal or a service required by the terminal, and characteristics of the service, the base station may adjust a VR size so that the terminal becomes located in a near-field region or so that the terminal becomes located in a far-field region.

For example, when a service to be provided to the terminal has a (very) low latency requirement, it is preferable that the terminal be located in the far-field. Therefore, by allocating a VR size to have a value smaller than $D_{field}$, the base station may provide the service in the same manner as in a case in which the terminal is located in the far-field. In contrast, when a service to be provided to the terminal requires a (very) high data rate, it is preferable that the terminal be located in the near-field. Therefore, by allocating a VR size to have a value greater than $D_{field}$, the base station may provide the service in the same manner as in a case in which the terminal is located in the near-field.

Consequently, the base-station antenna-array size criterion $D_{field}$ calculated in Equation 7 may be interpreted as a maximum VR size for the base station and the terminal to perform far-field communication and as a minimum VR size for the base station and the terminal to perform near-field communication.

In the present disclosure described above, the procedure has been described in which the size $D_{BS}$ of the base-station antenna array is set based on the base-station antenna-array size criterion $D_{field}$ in order to determine an electromagnetic wave region. However, in an actual communication environment, it is also possible to determine the size of the base-station antenna array by utilizing other values near $D_{field}$, that is, other approximations, which may show higher performance.

In addition, in the present disclosure, the process has been described in which the size $D_{BS}$ of the base-station antenna array is adjusted with the $D_{field}$ value fixed in order to perform communication according to a suitable electromagnetic wave region. However, it is also possible to perform communication through a desired electromagnetic wave region by adjusting the distance d between the base station and the terminal in a situation where the Rayleigh distance R is fixed.

For example, when the base station desires to perform near-field communication with the terminal, the base station may transmit, to the terminal, information on the Rayleigh distance R and instruction information indicating that the terminal needs to become closer than the Rayleigh distance. In this case, the instruction information may be composed of 1 bit or 2 bits or more. When the instruction information is composed of 1 bit, the instruction may be indicated as follows. For example, when the instruction information has a value of '+1', it may mean that the terminal needs to become farther than the Rayleigh distance, and when the instruction information has a value of '-1', it may mean that the terminal needs to become closer than the Rayleigh distance. Here, the values '+1' and '-1' may be predefined by mapping to '0' and '1' in binary.

The instruction information composed of 1 bit or 2 bits or more as described above may be provided to the terminal through various schemes. For example, the base station may transmit the instruction information to the terminal through DCI, MAC-CE, RRC reconfiguration, or new RRC signaling including the instruction information according to the present disclosure.

The terminal that receives the instruction information may generate movement information to move toward the base station in order to reduce a measured distance between the base station and the terminal when the instruction information indicates that the terminal needs to be located in the near-field, that is, when near-field communication needs to be performed. The movement information may be displayed to a user, or, in a case of equipment having an automatic navigation device and capable of moving by itself (e.g., unmanned automobile or unmanned drone), the movement information may instruct moving toward the XL-MIMO antenna of the base station. On the other hand, the terminal that receives the instruction information may generate movement information to move in a direction away from the base station in order to increase a measured distance between the base station and the terminal when the instruction information indicates that the terminal needs to be located in the far-field, that is, when far-field communication needs to be performed. The movement information may be displayed to a user, or, in a case of equipment mounted with an automatic navigation device capable of moving by itself (e.g., unmanned automobile or unmanned drone), the movement information may instruct moving away from the XL-MIMO antenna of the base station.

In addition to the method of instructing movement of the terminal based on the instruction information and the Rayleigh distance information, another method may be used to instruct movement of the terminal. For example, a method is also possible in which the terminal generates a movement instruction according to information transmitted by the base station when an RSRP falls below a certain threshold.

Meanwhile, the XL-MIMO system according to the present disclosure is expected to be used in a future 6G communication system. However, there may exist cases in which all terminals cannot support VR-based communication.

Therefore, the base station may perform operations of Section [2] and Section [3] described below only for terminals that support VR, and may not perform the operations of Section [2] and Section [3] for terminals that do not support VR. Since the base station needs to know whether a terminal supports VR, the terminal may transmit VR support information to the base station. The VR support information may be configured similarly to a manner in which information on a UE power class is reported to the base station according to the current 3GPP 5G NR standard specifications. In other words, the VR support information may be defined into different classes according to power and other hardware performance of the terminal. Therefore, the terminal may transmit VR support information to the base station through UE capability information.

[2] VR allocation method based on a latency requirement of a terminal or a mobility of the terminal

In Section [2], which is the second stage, when VR allocation is performed based on a latency requirement of the terminal or mobility of the terminal, methods and apparatuses are described in which a communication region of the terminal is determined based on the latency requirement of the terminal or mobility information of the terminal, and a VR corresponding to the determined communication region is allocated. In this case, as described above, the communication region of the terminal may be one of the near-field or the far-field.

Hereinafter, a VR allocation process based on a latency requirement of the terminal and/or mobility of the terminal is described.

The base station may have an XL-MIMO antenna panel and may include all or part of the components described in FIG. 2 above. In addition to the components illustrated in FIG. 2, the base station may further include additional components. For example, the base station may further include an interface for communication with a core network, an interface for communication with an adjacent base station, and an interface for communication with other communication devices (e.g., remote transceiver(s)) connected below.

The terminal may have a plurality of antennas and may form a transmission beam and/or a reception beam using the plurality of antennas. The terminal may include all or part of the components described in FIG. 2 above, and may further include additional components in addition to the components illustrated in FIG. 2. As examples of additional components in addition to the components illustrated in FIG. 2, the terminal may further include various devices such as various sensors (e.g., a geomagnetic sensor, an altitude sensor, etc.) for user convenience and a graphical user interface (GUI).

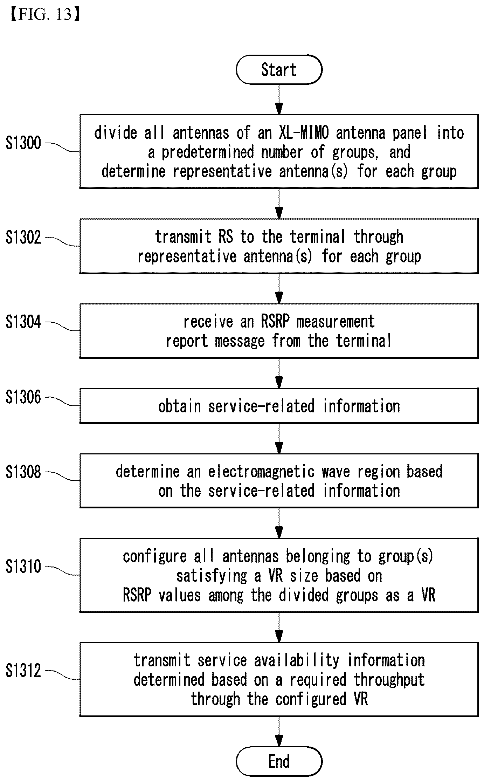

FIG. 13 is a flowchart illustrating an operation in which a base station having an XL-MIMO antenna panel allocates a VR corresponding to a terminal based on first service-related information.

FIG. 13 illustrates a flowchart for describing an operation of a base station. Therefore, an operation of a terminal corresponding to the operation of the base station is described below. If a description of the operation of the terminal corresponding to the base station is omitted, the operation of the terminal may be inferred from the operation of the base station. For example, when the base station receives a specific signal (or message or information) from the terminal, the terminal may perform an operation for generating the signal and may transmit the signal to the base station. When the base station transmits a signal (or message or information) to the terminal, the terminal may receive the signal from the base station and may demodulate and decode the received signal. The terminal may extract information from the decoded signal and may perform an operation corresponding thereto.

The base station that is a subject of the operation of FIG. 13 may have the same configuration as described with reference to FIG. 11 above, and the terminal may also have the same configuration as described with reference to FIG. 11. In other words, the base station may be a base station having an XL-MIMO antenna panel, and the terminal may be a terminal capable of communicating with the base station having the XL-MIMO antenna panel.

As shown in FIG. 13, in step S1300, the base station may divide all antennas of the XL-MIMO antenna panel into a predetermined number of groups. Here, the predetermined number may be arbitrarily determined by the base station, may be determined based on a computation capability of the base station, or may be determined based on information provided from the terminal. Assuming that a total number of antennas of the XL-MIMO antenna panel of the base station is 1024, the following is described. An actual total number of antennas of the XL-MIMO antenna panel may be greater than 1024. The assumption of 1024 antennas is merely for facilitating understanding of a procedure according to the present disclosure. The base station may divide 1024 antennas into 32 groups based on an arbitrary determination or based on the computation capability of the base station. The base station may determine one or two or more representative antennas for each group. In the present disclosure, for convenience of description, a case in which one representative antenna is determined for each group is assumed and described. However, it should be noted that the case of one representative antenna per group is merely for convenience of description, and the present disclosure is not limited to one representative antenna for each group.

In step S1302, the base station may transmit, to the terminal, RS through representative antenna(s) of each group. The RS transmitted by the base station may be a CSI-RS. The RS transmitted by the base station may be an RS newly defined for the present disclosure instead of CSI-RS. When transmitting RS, the base station may transmit RS through beam sweeping through the representative antennas per group. When the terminal supports group based beam reporting, the base station may transmit a plurality of beams to the terminal simultaneously.

In step S1302, for identification of each antenna, the base station may transmit a total of 32 different RSs to the terminal. When 32 different RSs are used, an RS transmitted through the representative antenna of the first group may be different from RSs transmitted through representative antennas of the remaining 31 different groups. By thus transmitting different RSs for the representative antennas, the base station may allow the terminal to identify the RS per antenna.

In step S1302, the terminal may receive, from the base station, the RS transmitted per representative antenna and may measure an RSRP of the received RS. The RSRP measured by the terminal may be an RSRP for the RS transmitted by each representative antenna. The terminal may report to the base station the RSRP value measured per representative antenna. In this case, when performing RSRP measurement reporting, the terminal may further include information indicating which reference signal (RS) transmitted by the base station has been received and used for the RSRP measurement. In other words, an RSRP measurement report message that the terminal reports may include information on an RS and an RSRP measurement value corresponding to the RS. Here, the information on the RS may be information on parameters used for generation of the RS. The parameters used for generation of the RS may be pre-transmitted to the terminal through higher-layer signaling (e.g., RRC signaling).

A method by which the terminal reports the RSRP values to the base station may be various. For example, when the terminal supports group-based beam reporting, the terminal may receive RSs simultaneously through a plurality of beams transmitted by the base station and may report to the base station RSRP measurement values for the received RSs simultaneously. In another example, when the terminal does not support group-based beam reporting, the terminal may report to the base station an RSRP measurement value each time a beam is received or on a preset periodic basis. A procedure in which the terminal reports RSRP measurement values to the base station may be understood to be the same as a CSI reporting procedure of the current 5G NR.

In step S1304, the base station may receive the RSRP measurement report message from the terminal. The base station may map and store the RSRP measurement report value for the RS transmitted through the representative antenna(s) of each group as in Table 3 below.

[Table 3]

| Representative antenna | Antennas belonging to the same group as the representative antenna | RSRP measurement value |
|---|---|---|
| A #16 | A #1, A #2, A #3, ..., A #31, A #32 | RSRP_106 |
| A #48 | A #33, A #34, A #35, ..., A #63, A #64 | RSRP_93 |
| A #80 | A #65, A #66, A #67, ..., A #95, A #96 | RSRP_70 |
| ... | ... | ... |
| A #976 | A #961, A #962, A #963, ..., A #991, A #992 | RSRP_53 |
| A #1008 | A #993, A #994, A #995, ..., A #1023, A #1024 | RSRP_84 |

Table 3 assumes a case in which the total number of antennas is 1024, and illustrates a case in which numbers from A #1 to A #1024 are assigned to the 1024 antennas, respectively. Referring to Table 3, A #16 may be the sixteenth antenna among the 1024 antennas and may be a representative antenna of the first group among the 32 groups, A #48 may be the forty-eighth antenna among the 1024 antennas and may be a representative antenna of the second group among the 32 groups, A #80 may be the eightieth antenna among the 1024 antennas and may be a representative antenna of the third group among the 32 groups, A #976 may be the nine hundred seventy-sixth antenna among the 1024 antennas and may be a representative antenna of the thirty-first group among the 32 groups, and A #1008 may be the one thousand eighth antenna among the 1024 antennas and may be a representative antenna of the thirty-second group among the 32 groups.

In Table 3, antennas belonging to the same group as the representative antenna are also assigned numbers in the same manner as the representative antenna, and a group to which each antenna belongs is illustrated. The groups exemplified in Table 3 assume a case in which each group includes the same number of antennas. In other words, the example of Table 3 may correspond to a case in which the first group is composed of a total of 32 antennas from the antenna A #1 to the antenna A #32. The second group to the thirty-second group may also be composed of 32 antennas per group in the same manner.

In the present disclosure, although a case is described by way of example in which, for allocation of a VR by the base station based on a latency requirement and/or mobility of the terminal, division into 32 groups is performed as in Table 3, this is merely an example and should not be understood as limiting the present disclosure.

In step S1306, the base station may obtain information (i.e., service-related information) related to a service to be provided to the terminal. In the present disclosure, the service-related information may be a latency requirement of the service (or data) to be provided to the terminal and/or mobility information of the terminal. The latency requirement of the service (or data) to be provided to the terminal may be configured for each service, or may be determined according to characteristics of the terminal. For example, a terminal for providing factory automation or communication equipment mounted in an automobile (or unmanned aerial vehicle, UAV) for autonomous driving may require a very low latency requirement. The latency requirement may be a latency requirement of the service or may be a latency requirement of the terminal. In another example, in a case such as a movie or a large-capacity data download, the requirement may be a requirement of the service.

In terms of mobility, a terminal for providing factory automation may have almost no mobility, but communication equipment mounted in an automobile or a UAV for autonomous driving may have high mobility. When characteristics of the terminal are predetermined as described, the service-related information may be determined according to the characteristics of the terminal. However, for communication equipment generally carried by a user, for example, a smartphone, a notebook computer, or a laptop, various services may be required according to requirements of the user.

Therefore, the base station may need a procedure of obtaining the service-related information from the terminal. In the present disclosure, the latency requirement and terminal mobility information described above are described as examples of the service-related information. However, the service-related information is not limited to the two elements above, and other information may also be utilized as the service-related information.

Examples of service-related information received by the base station from the terminal (or from a specific element of a core network) may be illustrated as in Table 4 below.

[Table 4]

| Latency requirement of the terminal | $t_{UE}$ |
|---|---|
| Mobility of the terminal | $v_{UE}$ |

$t_{UE}$ exemplified in Table 4 may be a value expressing the latency requirement of the terminal as time information. In addition, $v_{UE}$ exemplified in Table 4 may be a value expressing the mobility of the terminal as speed.

In step S1306, a procedure in which the base station obtains the service-related information from the terminal may be such that the terminal reports autonomously, or the base station requests the service-related information from the terminal through a request and response procedure, and the terminal transmits the service-related information to the base station in response to the request.

When the terminal reports autonomously, the terminal may report to the base station the latency requirement information of the terminal and/or the mobility information of the terminal as UCI. In another example, the terminal may report to the base station the latency requirement information of the terminal and/or the mobility information of the terminal through a message 1 (Msg1) of a four-step random access (RA) procedure or a message A (MsgA) of a two-step RA procedure. In another example, the terminal may report to the base station the latency requirement information of the terminal and/or the mobility information of the terminal through UE assistance information, or may transmit to the base station the latency requirement information of the terminal and/or the mobility information of the terminal through a newly defined RRC signaling message.

In another example, when the base station obtains the latency requirement information of the terminal and/or the mobility information of the terminal based on a request and response method, the base station may request the latency requirement information of the terminal and/or the mobility information of the terminal through a UE information request message. The terminal that receives the UE information request message may respond by reporting to the base station, in a UE information response message, the latency requirement information of the terminal and/or the mobility information of the terminal.

In the description of terminal mobility above, only speed information of the terminal has been considered. However, in order to have the terminal report a movement tendency of the terminal in a three-dimensional environment, the terminal may be configured to report parameters such as *EphemerisInfo,* which is used in the 5G NR Non Terrestrial Network (NTN).

On the other hand, step S 1300 described that the number of groups may be determined based on information provided from the terminal. The information provided from the terminal, which is used in step S1300, may be the service-related information described in step S1306. When the service-related information is used in step S1300, step S1306 may be performed before step S1300.

In the case that the service-related information is received before step S1300, the base station, when determining the number of antenna groups and the number of representative antennas in each antenna group, may set the number of representative antennas by taking into consideration the latency requirement of the terminal. When determining the number of representative antennas in consideration of the latency requirement, the base station may set a smaller number of representative antennas as a value of $t_{UE}$ received from the terminal becomes smaller, that is, as a shorter latency is required, because a process of measuring performance of representative antennas needs to be performed quickly. In contrast, when a value of $t_{UE}$ is large, that is, when a longer latency is required, the base station may set a larger number of representative antennas so as to perform a more precise measurement process.

In step S1308, an electromagnetic wave region may be determined based on the service related information. An example of VR size classification for determining an electromagnetic wave region based on the latency requirement of the terminal may be illustrated as in Table 5 below.

[Table 5]

| Latency requirement of the terminal | VR size ($D_{BS}$) |
|---|---|
| $t_{UE} < t_1$ | $D_1$ |
| $t_1 \leq t_{UE} < t_2$ | $D_2$ |
| $t_2 \leq t_{UE} < t_3$ | $D_3$ |
| ... | ... |
| $t_5 \leq t_{UE} < t_6 = t_{field}$ | $D_6 = D_{field}$ |
| $t_6 \leq t_{UE} < t_7$ | $D_7$ |
| ... | ... |
| $t_{10} \leq t_{UE}$ | $D_{11}$ |

In Table 5, the VR sizes $D_1$ to $D_{11}$ are antenna sizes that may be determined based on the number of groups selected from all antennas of the XL-MIMO antenna panel, and a case is exemplified in which the sizes are classified from the smallest size $D_1$ to the largest size $D_{11}$. In addition, in Table 5, values of the latency requirement of the terminal corresponding to the VR antenna sizes are mapped and arranged. The smallest VR region size $D_1$ may be set when the latency requirement $t_{UE}$ of the terminal described in Table 4 is smaller than a preset $t_1$, and the second smallest VR region size $D_2$ may be set when the latency requirement $t_{UE}$ of the terminal described in Table 4 has a value greater than the preset $t_1$ and smaller than $t_2$.

Therefore, the VR sizes exemplified in Table 5 illustrate a form in which VR sizes are classified based on $D_{field}$, which is the VR size criterion value for distinguishing far-field communication and near-field communication. Each VR size value may have a different size according to service-related information required by the terminal, for example, the latency requirement of the terminal. Therefore, the base station may select a VR size according to the latency requirement of the terminal, and may select some of the divided antenna groups so that a selected VR size condition is satisfied. The VR size condition may be a value that determines how many antennas among antennas of the XL-MIMO antenna panel need to be utilized. In Table 5, the condition is classified as $D_1$ to $D_{11}$.

The base station may select some of the divided antenna groups so as to satisfy the VR size corresponding to the latency requirement value of the terminal. When selecting a specific group among the divided antenna groups, the base station may select the specific group based on RSRP values of the respective representative antennas received as in Table 3. For example, when the VR size condition is satisfied with only one antenna group, the base station may select a group that includes a representative antenna having the highest RSRP value among the RSRP values of the respective representative antennas. In another example, when the VR size condition is satisfied only when two or more antenna groups are selected, the base station may select antenna groups sequentially from the highest RSRP value among the RSRP values of the respective representative antennas until the VR size condition is satisfied.

In Table 5, an example is illustrated in which the base station sets a VR size by using only latency requirement information of the terminal. This is for convenience of description of the present disclosure. In the same or a similar manner to Table 5, the base station may set $D_{BS}$ based only on mobility information of the terminal. In addition, the base station may configure a mapping table by applying Table 5 while comprehensively considering the latency requirement of the terminal and the mobility information of the terminal.

Operation of determining the VR size by using the latency requirement of the terminal among information acquired from the terminal as in Table 4 is described below with reference to Table 5.

For example, when the latency requirement value $t_{UE}$ of the terminal received from the terminal corresponds to a range $t_2 \leq t_{UE} < t_3$ that satisfies the condition of $D_3$, it corresponds to a case where the latency requirement of the terminal is lower than $t_{field}$, which is $D_{field}$, a reference value between the near field and the far field. Therefore, far-field communication may be appropriate. Accordingly, the base station may set the VR size to $D_3$ from Table 5.

In step S1310, when the base station sets the VR size to $D_3$ as described above, a number of antennas corresponding to $D_3$ may be predetermined in correspondence with $D_3$. In this case, when the number of antennas corresponding $D_3$ is 64, the base station may select two representative antennas having the highest RSRP measurement values based on RSRP measurement values of the representative antennas acquired as in Table 3. As described above, one group including one representative antenna has 32 antennas, and thus two groups are required to select 64 antennas. Accordingly, the base station may configure all antennas belonging to the groups including the selected representative antennas as the VR.

In step S1312, the base station may identify whether a service can be provided with the selected VR size in consideration of a throughput requirement to be provided to the terminal. For example, based on the procedure described above, after allocating an appropriate VR size according to the latency requirement of the terminal, the base station may identify whether the VR size can satisfy the throughput requirement of the terminal. Here, the throughput requirement may be understood as a target data rate of the terminal. By way of example in which the throughput requirement of the terminal is not satisfied, when the VR size determined according to the latency requirement of the terminal is too small, a VR allocated to the terminal may fail to satisfy the throughput requirement of the terminal. To enable checking whether the throughput requirement of the terminal is satisfied, the terminal may include the throughput requirement in the first signal to be transmitted, or may report the throughput requirement to the base station in advance by using another signal. In another example, the throughput requirement of the terminal may be predetermined and provided to the base station according to the service provided to the terminal by a specific node of a core network or according to a grade of the terminal.

As a method in which the terminal transmits throughput requirement information of the terminal to the base station, the terminal may transmit to the base station by using one of UCI, Msg1, MsgA, UE assistance information, or a newly defined RRC signaling message for transmitting the throughput requirement information of the terminal.

As a method in which the base station obtains the throughput requirement information of the terminal, the request and response method described above may also be used. For example, the base station may request from the terminal, through a UE information request message, information necessary to set a VR size. When the terminal receives the UE information request message, the terminal may transmit a UE information response message to the base station in response. The UE information response message may include the throughput requirement information requested by the base station. The base station may acquire the throughput requirement information of the terminal by one of the methods described above.

The base station may preset a minimum VR value $D_{min}$ for satisfying the throughput requirement before step S1312. Then, in step S1312, the base station may check whether the VR size set in step S1310 is greater than the minimum VR value $D_{min}$ for satisfying the throughput requirement. When the determined VR size is smaller than the minimum VR value $D_{min}$ for satisfying the throughput requirement, the base station may configure service-availability information to 'service unavailable' and may transmit the service-availability information to the terminal.

On the other hand, when the determined VR size is equal to or greater than the minimum VR value $D_{min}$ for satisfying the throughput requirement, in step S1312, the base station may configure service-availability information to 'service available' and may transmit the service-availability information to the terminal.

The service-availability information may be transmitted through one of DCI, MAC-CE, RRC reconfiguration, or a newly defined RRC signaling message for transmitting the service-availability information.

The terminal may receive, in step S1312, the service-availability information transmitted by the base station. When the service-availability information indicates 'service unavailable', the terminal may attempt communication with another base station.

Based on the method described above, when the service-availability information is configured to 'service available', the base station may transmit data to the terminal through the VR allocated to the terminal. In other words, the base station may provide, to the terminal and through a physical downlink control channel (PDCCH), DCI including information related to data to be transmitted to the terminal (e.g., resource allocation information, MCS, and the like). Then, the base station may transmit the data to the terminal through a physical downlink shared channel PDSCH by using a resource indicated by the DCI.

On the other hand, when the service-availability information indicates 'service unavailable', the base station may terminate communication with the terminal or may request, from the terminal, a change of service requirements.

The operations of Section [2] described above are summarized as follows.

The overall operations of Section [2] correspond to a procedure of allocating a VR based on the latency requirement $t_{UE}$ of the terminal and/or mobility $v_{UE}$ of the terminal, in which it is determined whether the terminal is suitable for near-field communication or for far-field communication, and a VR is allocated so that the terminal is located in a suitable electromagnetic wave region.

The base station may divide the XL-MIMO antenna panel into a preset number of groups, configure one or more representative antennas in each of the divided groups, and then transmit RS to the terminal through representative antennas of the respective groups. Then, the base station may receive RSs from the terminal, and store RSRP values corresponding to the RSs received through the representative antennas of the respective groups.

The base station may obtain service-related information from the terminal, for example, the latency requirement of the terminal and/or mobility information of the terminal. The base station may set $t_{field}$, which is an electromagnetic-wave region determination criterion based on the latency requirement of the terminal, and/or may set $v_{field}$, which is an electromagnetic-wave region determination criterion based on the mobility of the terminal. The base station may determine, based on the latency requirement of the terminal and/or the mobility of the terminal, whether near-field communication is appropriate or far-field communication is appropriate.

The base station may determine a VR size corresponding to an appropriate field, for example, the near field or the far field, based on the latency requirement of the terminal and/or the mobility of the terminal. In this case, the determination of the VR size may be determined based on $t_{field}$, which is the electromagnetic-wave region determination criterion based on the latency requirement of the terminal, and/or based on $v_{field}$, which is the electromagnetic-wave region determination criterion based on the mobility of the terminal. For example, when the latency requirement is lower than $t_{field}$, the electromagnetic-wave region determination criterion based on the latency requirement, or when the mobility of the terminal is higher than $v_{field}$, the electromagnetic-wave region determination criterion based on the mobility of the terminal, the base station may determine that far-field communication is appropriate for the terminal and may allocate the VR size corresponding to the terminal to be smaller than $D_{field}$. The lower the latency requirement of the terminal is, or the higher the mobility of the terminal is, the smaller the VR size may be allocated.

Conversely, when the latency requirement of the terminal is higher than $t_{field}$, the electromagnetic-wave region determination criterion, or when the mobility of the terminal is lower than $v_{field}$, the electromagnetic-wave region determination criterion based on the mobility of the terminal, the base station may determine that near-field communication is appropriate for the terminal and may allocate the VR size corresponding to the terminal to be larger than $D_{field}$.

In this case, $t_{field}$ and $v_{field}$ may be preset by the base station according to the number of XL-MIMO antennas and computational capability, or may be determined based on the service-related information received from the terminal.

In addition, to prevent a case in which the VR size is too small to satisfy a desired throughput requirement of the terminal, the base station may acquire in advance the desired throughput requirement from the terminal. The base station may calculate a minimum VR size $D_{min}$ based on the throughput requirement acquired in advance. The base station may determine whether the determined VR size is equal to or greater than $D_{min}$ and may configure service-availability information to be transmitted to the terminal. The base station may transmit the configured service-availability information to the terminal. When the terminal receives information indicating service unavailability, the terminal may attempt communication with another base station.

[3] VR allocation method based on a target data rate of the terminal

Hereinafter, the present disclosure describes methods of allocating a VR based on a target data rate of the terminal. The method based on a target data rate of the terminal described in Section [3] may correspond to a procedure similar to the method of allocating a VR based on a latency requirement of the terminal or based on mobility of the terminal that was described in Section [2]. However, unlike Section [2], a criterion of the method of Section [3] is a target data rate, and the method may correspond to a procedure of determining, based on the target data rate, whether data transmitted to the terminal (or a service provided to the terminal) is appropriate for near-field communication or appropriate for far-field communication, and allocating a VR suitable for an electromagnetic-wave region based on a determination result.

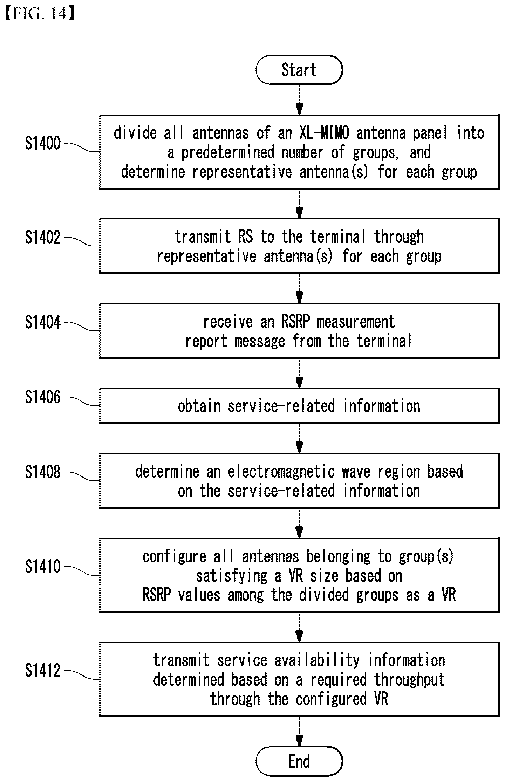

FIG. 14 is a flowchart illustrating an operation in which a base station having an XL-MIMO antenna panel allocates a VR corresponding to a terminal based on second service-related information.

FIG. 14 also illustrates a flowchart for describing an operation of a base station as described above. Therefore, an operation of a terminal corresponding to the operation of the base station is described below. When a description of the operation of the terminal corresponding to the base station is omitted, the operation of the terminal may be inferred from the operation of the base station. For example, when the base station receives a specific signal (or message or information) from the terminal, the terminal may perform an operation to generate the signal and may transmit the signal to the base station. In addition, when the base station transmits a signal (or message or information) to the terminal, the terminal may receive the signal from the base station and may demodulate and decode the received signal. The terminal may extract information from the decoded signal and may perform an operation corresponding thereto.

The base station that is a subject of the operation of FIG. 14 may have the configuration as described with reference to FIG. 13, and the terminal may also have the configuration as described with reference to FIG. 13. In other words, the base station may be a base station having an XL-MIMO antenna panel, and the terminal may be a terminal capable of communicating with the base station having the XL-MIMO antenna panel.

As shown in FIG. 14, in step S1400, the base station may divide all antennas of the XL-MIMO antenna panel into a predetermined number of groups. Here, the predetermined number may be arbitrarily determined by the base station, may be determined based on a computational capability of the base station, or may be determined based on information provided from the terminal. A case is described on the assumption that the number of all antennas of the XL-MIMO antenna panel of the base station is 1024. An actual number of all antennas of the XL-MIMO antenna panel may be greater than 1024. The assumption of 1024 antennas is merely for facilitating understanding of a procedure according to the present disclosure. The base station may divide 1024 antennas into 64 groups based on arbitrary determination or based on computational capability of the base station. The base station may determine one or two or more representative antennas for each group. In the present disclosure, for convenience of description, a case is described on the assumption that one representative antenna is determined for each group. However, a case where each group has one representative antenna is merely for convenience of description, and it should be noted that the present disclosure is not limited to one representative antenna per group.

In step S1402, the base station may transmit RS to the terminal through representative antenna(s) of each group. The RS transmitted by the base station may be a CSI-RS. As described with reference to FIG. 13, the RS transmitted by the base station may be a newly defined RS for the present disclosure instead of CSI-RS. When transmitting the RS, the base station may perform beam sweeping through representative antennas of the respective groups. When the terminal supports group-based beam reporting, the base station may simultaneously transmit a plurality of beams to the terminal.

In step S1402, for identification of each antenna, the base station may transmit to the terminal a total of 64 different RSs. When 64 different RSs are used, an RS transmitted through a representative antenna of the first group may be different from RSs transmitted through representative antennas of the other 63 groups. By transmitting different RSs for the respective representative antennas in this manner, the base station may enable the terminal to identify an RS for each antenna.

In step S1402, the terminal may receive RSs transmitted through respective representative antennas from the base station and may measure RSRP values of the received RSs. The RSRP values measured by the terminal may include an RSRP value for an RS transmitted via each representative antenna. The terminal may report to the base station the RSRP values measured respectively for the representative antennas. In this case, when performing RSRP measurement reporting, the terminal may further include information indicating which reference signal (RS) transmitted by the base station has been received and used for the RSRP measurement. In other words, an RSRP measurement report message reported by the terminal may include information on an RS and an RSRP measurement value corresponding to the RS. Here, the information on the RS may be information on parameters used to generate the RS. The parameters used to generate the RS may be transmitted in advance to the terminal through higher-layer signaling (e.g., RRC signaling).

In addition, a method in which the terminal reports RSRP values to the base station may be implemented in various manners. For example, when the terminal supports group-based beam reporting, the terminal may simultaneously receive RSs through a plurality of beams transmitted by the base station and may simultaneously report to the base station RSRP measurement values for the received RSs. In another example, when the terminal does not support group-based beam reporting, the terminal may report an RSRP measurement value to the base station each time a beam is received or on a preset periodic basis. A procedure in which the terminal reports RSRP measurement values to the base station may be understood as being the same as a CSI reporting procedure of current 5G NR.

In step S1404, the base station may receive the RSRP measurement report message from the terminal. The base station may map and store RSRP measurement report values for RSs transmitted through representative antennas of the respective groups as shown in Table 6 below.

[Table 6]

| Representative antenna | Antennas belonging to the same group as the representative antenna | RSRP measurement value |
|---|---|---|
| A #8 | A #1, A #2, A #3, ..., A #15, A #16 | RSRP_87 |
| A #24 | A #17, A #18, A #19, ..., A #31, A #32 | RSRP_73 |
| A #40 | A #33, A #34, A #35, ..., A #47, A #48 | RSRP_56 |
| ... | ... | ... |

(continued)

| Representative antenna | Antennas belonging to the same group as the representative antenna | RSRP measurement value |
|---|---|---|
| A #1000 | A #993, A #994, A #995, ..., A #1007, A #1008 | RSRP_67 |
| A #1016 | A #1009, A #1010, A #1011, ..., A #1023, A #1024 | RSRP_45 |

Table 6 illustrates a case under the assumption that the total number of antennas is 1024, in which 1024 antennas are numbered from A #1 to A #1024. Referring to Table 6, A #8 may be the eighth antenna among 1024 antennas and may be a representative antenna of the first group among 64 groups, A #24 may be the 24th antenna among 1024 antennas and may be a representative antenna of the second group among 64 groups, A #40 may be the 40th antenna among 1024 antennas and may be a representative antenna of the third group among 64 groups, A #1000 may be the 1000th antenna among 1024 antennas and may be a representative antenna of the 63rd group among 64 groups, and A #1016 may be the 1016th antenna among 1024 antennas and may be a representative antenna of the 64th group among 64 groups.

In the present disclosure, a case is described, as an example, in which the base station allocates a VR based on a target data rate and the antennas are divided into 64 groups as in Table 6. However, this is merely one example and should not be construed as limiting the present disclosure.

In Table 6, the antennas belonging to the same group as the representative antenna are also numbered in the same manner as the representative antenna, and a group to which each antenna belongs is illustrated. Each of the groups exemplified in Table 6 is an example under the assumption that each of the groups has the same number of antennas. In other words, the example of Table 6 may correspond to a case in which the first group is composed of a total of 16 antennas from antenna A #1 to antenna A #16. The second group to the 64th group may also correspond to cases in which each group is composed of 16 antennas in the same manner.

In step S1406, the base station may acquire information (i.e., service-related information) related to a service to be provided to the terminal. In the present disclosure, the service-related information may include a target data rate of data (or a service) to be provided to the terminal. For example, there may be a case in which a service that provides high-speed data to the terminal is required and another case in which low-speed data needs to be transmitted to the terminal. There may also be a case in which a certain required minimum data rate is needed. As such, the target data rate may require at least one of a minimum data rate, an average data rate, and a peak data rate. The present disclosure defines and describes information related to such data rates as the service-related information.

In the present disclosure, the target data rate described above is described as the service-related information by way of example. However, the service-related information is not limited to the target data rate described above, and other information may also be used as the service-related information. The service-related information received by the base station from the terminal (or from a specific element of a core network) may be exemplified as shown in Table 7 below.

[Table 7]

| Target data rate of the terminal | $r_{UE}$ |
|---|---|

Table 7 is an example in which the target data rate $r_{UE}$ of the terminal is determined as information necessary for the base station to determine a VR size.

In step S1406, a procedure in which the base station obtains service-related information from the terminal may be implemented such that the terminal autonomously reports the information, or may be implemented such that, through a request-and-response procedure, the base station requests the service-related information from the terminal and the terminal transmits the service-related information to the base station in response to the request.

When the terminal autonomously reports, the terminal may report information on its target data rate to the base station by using UCI. In another example, the terminal may report information on its target data rate to the base station by using a first message (Msg1) of a four-step RA procedure or a message A (MsgA) of a two-step RA procedure. In yet another example, the terminal may report information on its target data rate to the base station as UE assistance information, or may transmit information on its target data rate to the base station through a newly defined RRC signaling message that allows transmission of information on the target data rate.

In another example, when the base station obtains the latency requirement information of the terminal and/or the mobility information of the terminal based on a request-and-response method, the base station may request information on the target data rate through a UE information request message. The terminal that receives the UE information request message may respond to the base station by including information on the target data rate in a UE information response message.

On the other hand, step S1400 described that the number of groups may be determined based on information provided from the terminal. The information provided from the terminal, which is used in step S1400, may be the service-related information described in step S1406. When the service-related information is used in step S1400, step S1406 may be performed before step S1400.

When the service-related information is received before step S1400, the base station may set a number of representative antennas when determining the number of antenna groups and the number of representative antennas in each antenna group, in consideration of the target data rate of the terminal. When determining the number of representative antennas in consideration of the target data rate, if the value $r_{UE}$ received from the terminal has a value smaller than $r_{field}$ that distinguishes between near-field communication and far-field communication, the case may correspond to a case appropriate for near-field communication. Therefore, if $r_{UE}$ has a value smaller than $r_{field}$, the base station may allocate the VR to be smaller than $D_{field}$ that distinguishes between near-field communication and far-field communication. In contrast, if the value $r_{UE}$ has a value greater than $r_{field}$, the case may correspond to a case appropriate for far-field communication. If $r_{UE}$ has a value greater than $r_{field}$, the base station may allocate the VR to be greater than $D_{field}$ that distinguishes between near-field communication and far-field communication.

In step S1408, an electromagnetic-wave region may be determined based on the service-related information. As an example of VR size divisions for determining an electromagnetic-wave region based on a latency requirement of the terminal, the case may be exemplified as shown in Table 8 below.

[Table 8]

| Target data rate of the terminal | VR size ($D_{BS}$) |
|---|---|
| $r_{UE} < r_1$ | $D_1$ |
| $r_1 \leq r_{UE} < r_2$ | $D_2$ |
| $r_2 \leq r_{UE} < r_3$ | $D_3$ |
| ... | ... |
| $r_5 \leq r_{UE} < r_6 = r_{field}$ | $D_6 = D_{field}$ |
| $r_6 \leq r_{UE} < r_7$ | $D_7$ |
| ... | ... |
| $r_{10} \leq UE$ | $D_{11}$ |

In Table 8, VR sizes $D_1$ to $D_{11}$ may be antenna sizes that may be determined based on the number of groups selected from all antennas of the XL-MIMO antenna panel, and a case is exemplified in which the sizes are classified from the smallest size $D_1$ to the largest size $D_{11}$. In Table 8, the target data rates of the terminal corresponding to VR antenna sizes are also mapped and arranged. The smallest VR area size $D_1$ may be set when the target data rate $r_{UE}$ of the terminal described in Table 7 is smaller than a preset $r_1$, and the second smallest VR area size $D_2$ may be set when the target data rate $r_{UE}$ of the terminal described in Table 7 has a value greater than the preset $r_1$ and smaller than $r_2$.

Therefore, the VR sizes exemplified in Table 8 illustrate a form in which the VR sizes are classified based on $D_{field}$, which is a VR size criterion value for distinguishing far-field communication and near-field communication. Each of the VR size values may have a different VR size according to service-related information required by the terminal, for example, the target data rate of the terminal. Therefore, the base station may select a VR size according to the target data rate of the terminal and may select some of the divided antenna groups so that the selected VR size condition is satisfied. The VR size condition may be a value that determines how many antennas in the XL-MIMO antenna panel need to be utilized. In Table 8, the condition is classified as $D_1$ to $D_{11}$.

The base station may select some of the divided antenna groups so as to satisfy the VR size corresponding to the target data rate of the terminal. When the base station selects a specific group from the divided antenna groups, the base station may select the specific group based on RSRP values of the respective representative antennas received as in Table 6. For example, when the VR size condition is satisfied with only one antenna group, the base station may select a group that includes a representative antenna having the highest RSRP value among the RSRP values of the respective representative antennas. In another example, when the VR size condition is satisfied only when two or more antenna groups are selected, the base station may select antenna groups sequentially from the highest RSRP value among the RSRP values of the respective representative antennas until the VR size condition is satisfied.

An operation of determining the VR size by using the target data rate of the terminal obtained from the terminal as in Table 7 is described with reference to Table 8 as follows.

For example, when the target data rate $r_{UE}$ of the terminal received from the terminal falls within a range satisfying a condition of $D_7$, that is, $r_6 \leq r_{UE} < r_7$, the case may correspond to a case appropriate for near-field communication because the data rate required by the terminal corresponds to a case higher than $r_{field}$, which is a reference value for near-field and far-field based on $D_{field}$. Therefore, the base station may set the VR size to $D_7$ from Table 8.

In describing Table 8, only a case has been exemplified in which the target data rate is considered when determining an electromagnetic-wave region, that is, when determining far-field and near-field for the terminal. However, the base station may determine the electromagnetic-wave region in consideration together with the number of XL-MIMO antennas and a computation capability of the base station.

In step S1410, when the base station sets the VR size to $D_7$ as described above, a number of antennas corresponding to $D_7$ may be predetermined in correspondence with $D_7$. In this case, when the number of antennas corresponding to $D_7$ is 128, the base station may select eight representative antennas having the highest RSRP values based on RSRP measurement values of the representative antennas acquired as in Table 6. As described above, because one group including one representative antenna has 16 antennas, 16 groups are required to select 128 antennas. Therefore, the base station may configure all antennas belonging to the groups including the selected representative antennas as the VR.

In step S1412, after the base station allocates an appropriate VR size according to the target data rate to be provided to the terminal, the base station may identify whether a service can be provided with the VR size allocated to the terminal in consideration of a throughput requirement of the terminal. For example, based on the above-described procedure, after allocating an appropriate VR size according to the latency requirement of the terminal, the base station may identify whether the VR size can satisfy the throughput requirement of the terminal. The throughput requirement of the terminal may be understood as the target data rate of the terminal. Examples of cases in which the throughput requirement of the terminal is not satisfied are as follows.

When the VR size determined according to the target data rate of the terminal is too large, there may occur a case in which a performance requirement of the terminal is not satisfied as compared to a case in which another base station not using XL-MIMO communicates with the terminal.

To determine whether the performance requirement of the terminal is satisfied, the terminal may include a performance requirement of the terminal in the first signal and transmit the first signal. In another example, the performance requirement of the terminal may be determined according to a service provided to the terminal by a specific node of a core network or according to a grade of the terminal provided to the terminal and may be provided to the base station.

When the terminal transmits performance-requirement information of the terminal to the base station, the terminal may transmit the performance-requirement information to the base station by using one of UCI, Msg1, MsgA, UE assistance information, or a newly defined RRC signaling message that allows transmission of the performance-requirement information of the terminal.

As a method for the base station to obtain the performance-requirement information of the terminal, the request-and-response method described above may also be used. For example, to set a VR size, the base station may request information necessary therefor from the terminal through a UE information request message. When the terminal receives the UE information request message, the terminal may transmit a UE information response message to the base station in response thereto. The UE information response message may include performance-requirement information requested by the base station. The base station may obtain the performance-requirement information of the terminal through one of the above methods.

The base station may preset a maximum VR size $D_{max}$ to satisfy the performance requirement before step S1412. In step S1412, the base station may determine whether the VR size set in step S1410 is smaller than the maximum VR size $D_{max}$ to satisfy the throughput requirement. When the VR size set in step S1410 is greater than the maximum VR size $D_{max}$ to satisfy the throughput requirement, the base station may configure service-availability information to 'service unavailable' and may transmit the service-availability information to the terminal.

On the other hand, when the VR size set in step S1410 is less than the maximum VR size $D_{max}$ to satisfy the performance requirement, the base station may configure service-availability information to 'service available' in step S1412 and may transmit the service-availability information to the terminal.

Based on the above-described method, when the service-availability information is configured to 'service available', the base station may transmit data to the terminal through the VR allocated to the terminal. In other words, the base station may provide, to the terminal, information related to data to be transmitted to the terminal through DCI on a PDCCH. The base station may transmit the data to the terminal through a resource indicated by the DCI on a PDSCH.

In the above, only the determined VR size has been simply considered. However, when determining the VR size for the terminal, the base station may also consider a current traffic amount of the base station.

The service-availability information may be transmitted through one of DCI, a MAC-CE, an RRC reconfiguration, or a newly defined RRC signaling message configured to transmit service-availability information.

In step S1312, the terminal may receive the service-availability information transmitted by the base station. When the service-availability information indicates 'service unavailable', the terminal may reconfigure a target data rate, may transmit the reconfigured target data rate to the base station, or may attempt communication with a new base station.

When a time required for a procedure of reconfiguring the target data rate is expected to be long and it is determined that, in terms of latency, transmitting data to the terminal through a VR having a size of $D_{max}$ is advantageous, the base station may allocate to the terminal a VR having a size of $D_{max}$ and may transmit data multiple times through the allocated VR.

In Section [2] described above, the case has been described in which the latency requirement of the terminal and/or the mobility of the terminal is used as an example of a criterion for determining a VR size. In Section [3] described above, the case has been described in which the target data rate of the terminal is used as a criterion for determining a VR size. In the present disclosure, Section [2] and Section [3] have been described separately for ease of understanding of the present disclosure. A person skilled in the art may collectively consider the criteria for determining a VR size described in Section [2] and Section [3]. In other words, the terminal latency requirement, terminal mobility, and/or target data rate may be used respectively or two or more of them may be considered together.

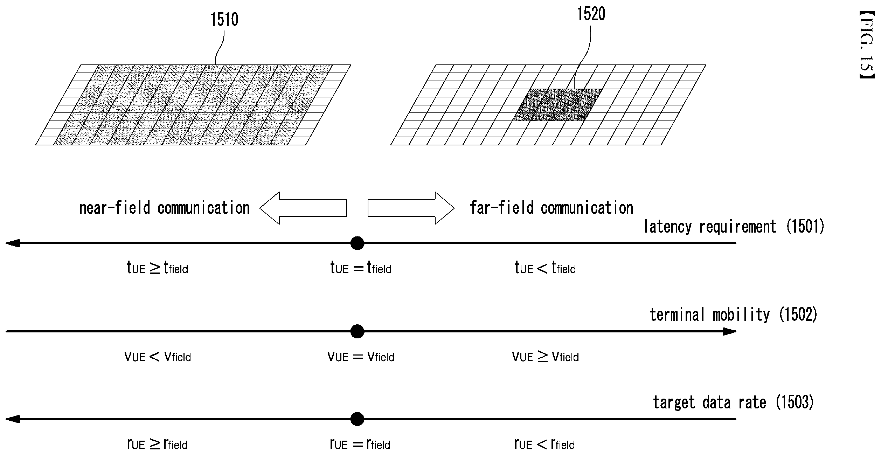

FIG. 15 is a conceptual diagram illustrating correlations between VR size determination criteria and VR sizes.

As shown in FIG. 15, XL-MIMO antenna panels are illustrated at the top, and examples of a VR 1510 of an XL-MIMO antenna panel used for near-field communication and a VR 1520 of an XL-MIMO antenna panel used for far-field communication are shown.

In the present disclosure, a latency requirement 1501 may configure a reference value $t_{UE}$ to $t_{field}$ for use in near-field communication and far-field communication. When $t_{UE}$ is greater than or equal to $t_{field}$, the base station may determine that the terminal is appropriate for near-field communication and may allocate to the terminal a VR appropriate for near-field communication. Conversely, when $t_{UE}$ is smaller than $t_{field}$, the base station may determine that the terminal is appropriate for far-field communication and may allocate to the terminal a VR appropriate for far-field communication.

In the present disclosure, the terminal mobility 1502 may configure a reference value $v_{UE}$ to $v_{field}$ for use in near-field communication and far-field communication. When $v_{UE}$ is smaller than $v_{field}$, the base station may determine that the terminal is appropriate for near-field communication and may allocate to the terminal a VR appropriate for near-field communication. Conversely, when $v_{UE}$ is greater than or equal to $v_{field}$, the base station may determine that the terminal is appropriate for far-field communication and may allocate to the terminal a VR appropriate for far-field communication.

In the present disclosure, a target data rate 1503 may configure a reference value $r_{UE}$ to $r_{filed}$ for use in near-field communication and far-field communication. When $r_{UE}$ is greater than or equal to $r_{filed}$, the base station may determine that the terminal is appropriate for near-field communication and may allocate to the terminal a VR appropriate for near-field communication. Conversely, when $r_{UE}$ is greater than or equal to $r_{filed}$, the base station may determine that the terminal is appropriate for far-field communication and may allocate to the terminal a VR appropriate for far-field communication.

As described above, the target data rate may also be understood as a throughput requirement.

Based on the above description, first, the VR size criterion may be determined using the method of Section [1] of the present disclosure, and a VR size to be allocated to the terminal may be determined in consideration of the matters of Section [2]. Second, the VR size criterion may be determined using the method of Section [1] of the present disclosure, and a VR size to be allocated to the terminal may be determined in consideration of the matter of Section [3]. Third, the VR size criterion may be determined using the method of Section [1] of the present disclosure, and a VR size to be allocated to the terminal may be determined in consideration of the matters described in Section [2] and Section [3].

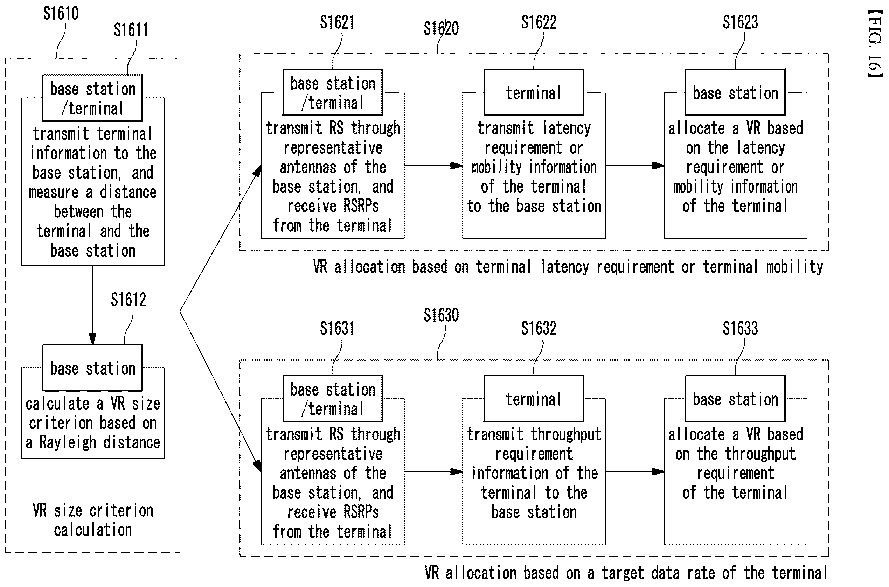

The first and second matters described above is described with reference to FIG. 16 below.

FIG. 16 is a conceptual diagram illustrating an operation of allocating a VR to a specific terminal based on service-related information of the terminal.

Step S1610 may be a step of calculating a VR size criterion. Step S1610 may specifically include step S1611 and step S1612.

Step S1611 may be an operation performed mutually between the base station and the terminal. In step S1611, the terminal may transmit terminal information to the base station, and the base station may receive the terminal information. In addition, the base station and the terminal may measure a distance between the base station and the terminal. This may correspond to step S1100 of FIG. 11 described above. Because various exemplary embodiments thereof have been described in FIG. 11 above, a redundant description is omitted.

Step S1612 may be an operation performed at the base station. In step S1612, the base station may calculate a VR size criterion based on a Rayleigh distance. The calculation may be performed as described in Equations 1 to 3. In addition, the calculation may be modified and used as in Equation 4 or Equation 5 based on the respective calculated values. The VR size criterion may finally be calculated as in Equation 7.

Step S1620 may be a procedure of VR allocation based on the terminal latency requirement or based on the terminal mobility as described in Section [2] above.

Step S1621 may be a procedure performed by the base station and the terminal. The base station may divide an XL-MIMO antenna panel into a predetermined number of groups or may divide antennas into a number of groups based on requirements of the terminal. The base station may select a representative antenna for each group and may transmit RS to the terminal through the selected representative antenna. The terminal may receive the RS transmitted through each representative antenna, may measure an RSRP, and may report, to the base station, information for identifying the representative antenna together with a measured RSRP value. The base station may receive antenna identification information and an RSRP for the antenna from the terminal and may map and store the same. For each representative antenna, the RSRP and antennas belonging to the same group as the representative antenna may be mapped in a form similar to Table 3 described above.

Step S1622 may be an operation of the terminal. The terminal may transmit terminal latency-requirement information and/or mobility information to the base station. Accordingly, the base station may receive the latency-requirement information and/or the mobility information from the terminal.

Step S1623 may be an operation of the base station. The base station may allocate a VR to the terminal based on the terminal latency-requirement information and/or the mobility information. Because methods for the base station to allocate a VR to the terminal have been described in Table 5 and the contents below and have also been described in FIG. 15, a redundant description is omitted.

Meanwhile, after calculation of the VR size criterion is completed, a VR may be allocated based on a target data rate of the terminal. In other words, step S1630 may be performed after step S1610.

Step S1631 may be a procedure performed by the base station and the terminal. The base station may divide an XL-MIMO antenna panel into a predetermined number of groups or may divide antennas into a number of groups based on requirements of the terminal. The base station may select a representative antenna for each group and may transmit an RS to the terminal through the selected representative antenna. The terminal may receive the RS transmitted through each representative antenna, may measure an RSRP, and may report to the base station together with a measured RSRP value including information for identifying the representative antenna. The base station may receive antenna identification information and an RSRP for the antenna from the terminal and may map and store the same. For each representative antenna, the RSRP and antennas belonging to the same group as the representative antenna may be mapped in a form similar to Table 6 described above.

Step S1632 may be an operation of the terminal. The terminal may transmit throughput-requirement information (e.g., a target data rate) of the terminal to the base station. Accordingly, the base station may receive the throughput-requirement information from the terminal. As described with reference to FIG. 14 above, the throughput-requirement information may be received from a core network.

Step S1633 may be an operation of the base station. The base station may allocate a VR to the terminal based on the throughput requirement of the terminal. Because methods for the base station to allocate a VR to the terminal have been described in Table 8 and the contents below and have also been described in FIG. 15, a redundant description is omitted.

In the present disclosure described above, procedures have been described for allocating a VR to the terminal based respectively on the terminal latency requirement, terminal mobility, or terminal throughput requirement (e.g., target data rate). However, a form in which two or more of the terminal latency requirement, the terminal mobility, or the terminal throughput requirement are collectively considered is also possible. In this case, depending on what is prioritized, for example, when priority is given to the latency requirement, terminal mobility or the target data rate may be further considered in a more subdivided manner within a range that satisfies the latency requirement. In such a case, a hierarchical procedure may be carried out. In addition to the matters described in the present disclosure, other requirements may be further considered, and the present disclosure is not limited to only the requirements described above.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

# EP 4 701 091 A1

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1.  A method of a base station, comprising:

    receiving, from a terminal, a first signal including information on a distance between the base station and the terminal and information on an array antenna size of the terminal;
    determining, based on the distance between the base station and the terminal, a visibility region (VR) criterion value for distinguishing far-field communication and near-field communication in an extra-large scale massive multiple-input multiple-output (XL-MIMO) antenna panel;
    dividing the XL-MIMO antenna panel into a predetermined number of groups;
    transmitting, to the terminal, reference signals (RSs) through representative antennas of the respective divided groups;
    receiving, from the terminal, reference signal received powers (RSRPs) for the representative antennas;
    receiving, from the terminal, service-related information of the terminal; and
    determining, based on the service-related information and the RSRPs for the representative antennas, a VR to be allocated to the terminal in the XL-MIMO antenna panel, such that the terminal is located in a far-field region or a near-field region distinguished by the VR size criterion value.

2.  The method of claim 1, wherein the service-related information is one of a latency requirement of the terminal, a mobility of the terminal, or a target data rate of the terminal.

3.  The method of claim 1, further comprising:

    determining whether a service to the terminal is available through the determined VR by using first information in the service-related information, which is not used in determining the VR; and
    transmitting, to the terminal, service-availability information based on the determining.

4.  The method of claim 3, further comprising:

    based on the service-availability information indicating that the service is available, transmitting, to the terminal, downlink control information (DCI) including resource allocation information for first data to be transmitted to the terminal and modulation and coding rate information for the first data; and
    transmitting, to the terminal, the first data modulated and encoded based on the DCI.

5.  The method of claim 3, further comprising:

    based on the service-availability information indicating that the service is unavailable, requesting the terminal to reconfigure the service-related information;
    receiving, from the terminal, the reconfigured service-related information; and
    re-determining, based on the reconfigured service-related information, a VR to be allocated to the terminal in the XL-MIMO antenna panel such that the terminal is located in the far-field region or the near-field region.

6.  The method of claim 1, further comprising:

    determining whether a service to the terminal is available through the determined VR by using first information in the service-related information, which is not used in determining the VR;
    based on the service being unavailable through the determined VR, comparing a time required for reconfiguring the service-related information and a time required for providing the service through the determined VR; and
    based on the time required for providing the service through the determined VR being shorter than the time required for reconfiguring the service-related information, transmitting first data to be transmitted to the terminal through the determined VR in two or more divided transmissions.

7. The method of claim 1, wherein the VR size criterion value is an antenna size value of the XL-MIMO antenna panel corresponding to a first value that distinguishes near-field communication and far-field communication based on a Rayleigh distance.

8. The method of claim 1, wherein the determining of the VR to be allocated to the terminal comprises:

determining a required VR size based on the service-related information; and
allocating, to the VR, groups of representative antennas having higher RSRP values among the RSRP values for the representative antennas of the divided groups of the XL-MIMO antenna panel, until the required VR size is satisfied,
wherein all antennas belonging to a same group as each representative antenna allocated to the VR are allocated to the VR.

9. A base station comprising at least one processor, wherein the at least one processor is configured to cause the base station to:

receive, from a terminal, a first signal including information on a distance between the base station and the terminal and information on an array antenna size of the terminal;
determine, based on the distance information between the base station and the terminal, a visibility region (VR) size criterion value for distinguishing far-field communication and near-field communication in an extra-large scale massive multiple-input multiple-output (XL-MIMO) antenna panel;
divide the XL-MIMO antenna panel into a predetermined number of groups;
transmit, to the terminal, reference signals (RSs) through representative antennas of the respective divided groups;
receive, from the terminal, reference signal received powers (RSRPs) for the representative antennas;
receive, from the terminal, service-related information of the terminal; and
determine, based on the service-related information and the RSRPs for the representative antennas, a VR to be allocated to the terminal in the XL-MIMO antenna panel, such that the terminal is located in a far-field region or a near-field region distinguished by the VR size criterion value.

10. The base station of claim 9, wherein the service-related information is one of a latency requirement of the terminal, a mobility of the terminal, or a target data rate of the terminal.

11. The base station of claim 9, wherein the at least one processor is configured to cause the base station to:

determine whether a service to the terminal is available through the determined VR by using first information in the service-related information, which is not used in determining the VR; and
transmit, to the terminal, service-availability information based on the determining.

12. The base station of claim 11, wherein the at least one processor is configured to cause the base station to:

based on the service-availability information indicating that the service is available, transmit, to the terminal, downlink control information (DCI) including resource allocation information for first data to be transmitted to the terminal and modulation and coding rate information for the first data; and
transmit, to the terminal, the first data modulated and encoded based on the DCI.

13. The base station of claim 11, wherein the at least one processor is configured to cause the base station to:

based on the service-availability information indicating that the service is unavailable, request the terminal to reconfigure the service-related information;
receive, from the terminal, the reconfigured service-related information; and
re-determine, based on the reconfigured service-related information, a VR to be allocated to the terminal in the XL-MIMO antenna panel such that the terminal is located in the far-field region or the near-field region.

14. The base station of claim 9, wherein the at least one processor is configured to cause the base station to:

determine whether a service to the terminal is available through the determined VR by using first information in the service-related information, which is not used in determining the VR;

EP 4 701 091 A1

based on the service being unavailable through the determined VR, compare a time required for reconfiguring the service-related information and a time required for providing the service through the determined VR; and based on the time required for providing the service through the determined VR being shorter than the time required for reconfiguring the service-related information, transmit first data to be transmitted to the terminal through the determined VR in two or more divided transmissions.

15. The method of claim 1, wherein the VR size criterion value is an antenna size value of the XL-MIMO antenna panel corresponding to a first value that distinguishes near-field communication and far-field communication based on a Rayleigh distance.

16. A method of a terminal, comprising:

calculating a distance to a first base station based on a first reference signal (RS) received from the first base station;
transmitting, to the first base station, a first signal including information on the calculated distance to the first base station and information on an array antenna size of the terminal;
calculating a reference signal received power (RSRP) for each of second RSs received from the first base station;
transmitting, to the first base station, a report message including information for identifying each of the second RSs and the RSRPs corresponding to the second RSs;
transmitting, to the first base station, service-related information required by the terminal; and
receiving, from the first base station, service-availability information indicating whether a service is available through a visibility region (VR),
wherein the VR is composed of antennas in an extra-large scale massive multiple-input multiple-output (XL-MIMO) antenna panel of the first base station that are capable of communicating with the terminal.

17. The method of claim 16, wherein the information for identifying each of the second RSs is one of an antenna identifier or generation parameters of each of the second RSs.

18. The method of claim 16, wherein the service-related information is one of a latency requirement of the terminal, a mobility of the terminal, or a target data rate of the terminal.

19. The method of claim 16, further comprising: based on the service-availability information indicating that the service is available, communicating with the first base station.

20. The method of claim 16, further comprising: based on the service-availability information indicating that the service is unavailable, attempting to communicate with a second base station.

【FIG. 1】

【FIG. 2】

【FIG. 3】

【FIG. 4A】

【FIG. 4B】

【FIG. 5】

【FIG. 6】

subframe (1ms)

| slot #0 | slot #1 | ... | slot #n |

【FIG. 7】

slot

| #0 | #1 | #2 | #3 | #4 | #5 | #6 | #7 | #8 | #9 | #10 | #11 | #12 | #13 |

OFDM symbol

【FIG. 8】

REG

N subcarriers

RE

N OFDM symbols

【FIG. 9】

【FIG. 10A】

【FIG. 10B】

【FIG. 10C】

【FIG. 11】

【FIG. 12A】

【FIG. 12B】

【FIG. 13】

Start

S1300 — divide all antennas of an XL-MIMO antenna panel into a predetermined number of groups, and determine representative antenna(s) for each group

S1302 — transmit RS to the terminal through representative antenna(s) for each group

S1304 — receive an RSRP measurement report message from the terminal

S1306 — obtain service-related information

S1308 — determine an electromagnetic wave region based on the service-related information

S1310 — configure all antennas belonging to group(s) satisfying a VR size based on RSRP values among the divided groups as a VR

S1312 — transmit service availability information determined based on a required throughput through the configured VR

End

【FIG. 14】

```
                          ┌──────────┐
                          │  Start   │
                          └──────────┘
                                │
                                ▼
          ┌────────────────────────────────────────────────┐
S1400 ────┤  divide all antennas of an XL-MIMO antenna panel into │
          │         a predetermined number of groups, and        │
          │  determine representative antenna(s) for each group   │
          └────────────────────────────────────────────────┘
                                │
                                ▼
          ┌────────────────────────────────────────────────┐
S1402 ────┤         transmit RS to the terminal through          │
          │       representative antenna(s) for each group        │
          └────────────────────────────────────────────────┘
                                │
                                ▼
          ┌────────────────────────────────────────────────┐
S1404 ────┤             receive an RSRP measurement              │
          │          report message from the terminal            │
          └────────────────────────────────────────────────┘
                                │
                                ▼
          ┌────────────────────────────────────────────────┐
S1406 ────┤          obtain service-related information          │
          └────────────────────────────────────────────────┘
                                │
                                ▼
          ┌────────────────────────────────────────────────┐
S1408 ────┤   determine an electromagnetic wave region based     │
          │          on the service-related information          │
          └────────────────────────────────────────────────┘
                                │
                                ▼
          ┌────────────────────────────────────────────────┐
S1410 ────┤       configure all antennas belonging to group(s)   │
          │              satisfying a VR size based on            │
          │       RSRP values among the divided groups as a VR    │
          └────────────────────────────────────────────────┘
                                │
                                ▼
          ┌────────────────────────────────────────────────┐
S1412 ────┤      transmit service availability information       │
          │    determined based on a required throughput         │
          │           through the configured VR                  │
          └────────────────────────────────────────────────┘
                                │
                                ▼
                          ┌──────────┐
                          │   End    │
                          └──────────┘
```

[FIG. 15]

EP 4 701 091 A1

1510

1520

near-field communication ⟸  ⟹ far-field communication

latency requirement (1501)

$t_{UE} \geq t_{field}$    $t_{UE} = t_{field}$    $t_{UE} < t_{field}$

terminal mobility (1502)

$v_{UE} < v_{field}$    $v_{UE} = v_{field}$    $v_{UE} \geq v_{field}$

target data rate (1503)

$r_{UE} \geq r_{field}$    $r_{UE} = r_{field}$    $r_{UE} < r_{field}$

【FIG. 16】

S1610

S1611 — base station /terminal — transmit terminal information to the base station, and measure a distance between the terminal and the base station

S1612 — base station — calculate a VR size criterion based on a Rayleigh distance

VR size criterion calculation

S1620

S1621 — base station /terminal — transmit RS through representative antennas of the base station, and receive RSRPs from the terminal

S1622 — terminal — transmit latency requirement or mobility information of the terminal to the base station

S1623 — base station — allocate a VR based on the latency requirement or mobility information of the terminal

VR allocation based on terminal latency requirement or terminal mobility

S1630

S1631 — base station /terminal — transmit RS through representative antennas of the base station, and receive RSRPs from the terminal

S1632 — terminal — transmit throughput requirement information of the terminal to the base station

S1633 — base station — allocate a VR based on the throughput requirement of the terminal

VR allocation based on a target data rate of the terminal

## INTERNATIONAL SEARCH REPORT

| International application No. |
| --- |
| **PCT/KR2024/009421** |

| A. | CLASSIFICATION OF SUBJECT MATTER |
| --- | --- |

**H04B 7/0413**(2017.01)i; **H04B 5/72**(2024.01)i; **H04W 24/08**(2009.01)i; **H04W 24/10**(2009.01)i; **H04W 64/00**(2009.01)i; **H04W 72/21**(2023.01)i; **H04W 72/231**(2023.01)i; **H04W 72/232**(2023.01)i; **H04B 17/318**(2015.01)i

According to International Patent Classification (IPC) or to both national classification and IPC

| B. | FIELDS SEARCHED |
| --- | --- |

Minimum documentation searched (classification system followed by classification symbols)

H04B 7/0413(2017.01); H04B 7/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 초대규모 다중 입력 다중 출력(extra-large scale multiple input multiple output), 원거리 필드(far field), 근거리 필드(near field), 가시 영역(visibility region), 크기 기준 값(size reference value)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | TIAN, Jiachen et al. Low-Overhead Localization and VR Identification for Subarray-Based ELAA Systems. IEEE Wireless Communications Letters. Volume: 12, Issue: 5, February 2023. See pages 1-5. | 1-20 |
| A | UBIALI, Gabriel Avanzi et al. Improving Spectral Efficiency via Pilot Assignment and Subarray Selection Under Realistic XL-MIMO Channels. arXiv:2304.03873v1 [cs.IT]. 08 April 2023. See pages 5-20. | 1-20 |
| A | YOU, Changsheng et al. Near-Field Beam Management for Extremely Large-Scale Array Communications. arXiv:2306.16206v1 [eess.SP]. 28 June 2023. See pages 1-7. | 1-20 |
| A | MARINELLO FILHO, José Carlos et al. Exploring the Non-Overlapping Visibility Regions in XL-MIMO Random Access Protocol. arXiv:2107.09169v1 [cs.IT]. 19 July 2021. See pages 1-10. | 1-20 |
| A | CN 115776317 A (HUAWEI TECHNOLOGIES CO., LTD.) 10 March 2023 (2023-03-10) See claims 1-9. | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 October 2024** | **25 October 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/009421**

| Patent document cited in search report | | | Publication date (day/month/year) | Patent family member(s) | | | Publication date (day/month/year) |
|---|---|---|---|---|---|---|---|
| CN | 115776317 | A | 10 March 2023 | EP | 4391411 | A1 | 26 June 2024 |
| | | | | US | 2024-0214088 | A1 | 27 June 2024 |
| | | | | WO | 2023-035968 | A1 | 16 March 2023 |

Form PCT/ISA/210 (patent family annex) (July 2022)